(19) **Europäisches Patentamt / European Patent Office / Office européen des brevets**

(11) **EP 4 030 813 A1**

(12) # EUROPEAN PATENT APPLICATION
published in accordance with Art. 153(4) EPC

(43) Date of publication:
**20.07.2022 Bulletin 2022/29**

(21) Application number: **19945018.0**

(22) Date of filing: **13.09.2019**

(51) International Patent Classification (IPC):
***H04W 24/10*** *(2009.01)*

(52) Cooperative Patent Classification (CPC):
**H04W 24/10**

(86) International application number:
**PCT/JP2019/036133**

(87) International publication number:
**WO 2021/049012 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **LIU, Wenjia**
**Beijing 100190 (CN)**
• **WANG, Jing**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57) A terminal according to an aspect of the present disclosure includes: a control section that determines a plurality of pieces of channel state information (CSI) corresponding to at least one group and an ID corresponding to each of the plurality of pieces of CSI, each of the at least one group corresponding to at least one channel measurement; and a transmitting section that transmits each of the plurality of pieces of CSI in an occasion corresponding to the ID. With this configuration, reduction of reliability of CSI can be prevented while reducing increase of UL overhead.

FIRST INCREMENTAL FEEDBACK  SECOND INCREMENTAL FEEDBACK

UCI#1  UCI#2  UCI#3  UCI#1  UCI#2  UCI#3

RELATIVE UCI ID

FIG. 9

EP 4 030 813 A1

**Description**

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In Rel. 15 NR, as frequency granularity of channel state information (CSI) report (reporting), a wideband and a subband are supported.

Here, the wideband is an entire band to be a report target of the CSI, and is, for example, an entire certain carrier (also referred to as a component carrier (CC), a cell, a serving cell, or the like). The subband is a part of the wideband, and is, for example, one or more physical resource blocks (PRBs) (or resource blocks (RBs)). The size of the subband (subband size, for example, the number of PRBs) may be determined according to the size of the wideband (wideband size, for example, the number of PRBs).

In future radio communication systems (for example, NR of Rel. 16 or later versions), it is also assumed that at least one of a wide bandwidth (for example, a bandwidth wider than that of Rel. 15 NR) and a high frequency band (for example, a frequency band higher than any one of 7.125 GHz, 24.25 GHz, and 52.6 GHz, a frequency band higher than that of Rel. 15 NR) is made available.

However, in the future radio communication systems, when the wideband to be a report target of the CSI is further widened, the subband size dependent on the wideband size becomes larger than a coherence bandwidth, which may result in deterioration of reliability of the CSI. In contrast, if the subband size is intended to be made sufficiently smaller than the coherence bandwidth in the further widened wideband, overhead of the uplink (UL) may be increased.

In the light of this, the present disclosure has one object to provide a terminal and a radio communication method that can prevent reduction of reliability of CSI while reducing increase of UL overhead. Solution to Problem

A terminal according to an aspect of the present disclosure includes: a control section that determines a plurality of pieces of channel state information (CSI) corresponding to at least one group and an ID corresponding to each of the plurality of pieces of CSI, each of the at least one group corresponding to at least one channel measurement; and a transmitting section that transmits each of the plurality of pieces of CSI in an occasion corresponding to the ID. Advantageous Effects of Invention

According to an aspect of the present disclosure, reduction of reliability of CSI can be prevented while reducing increase of UL overhead.

Brief Description of Drawings

FIG. 1 is a diagram to show an example of coding and rate matching of UCI;

FIG. 2 is a diagram to show an example of UCI length;
FIG. 3 is a diagram to show an example of operation of CSI report;
FIG. 4A and FIG. 4B are each a diagram to show an example of feedback of wideband information;
FIG. 5 is a diagram to show an example of a precoder based on the wideband information;
FIG. 6 is a diagram to show another example of the precoder based on the wideband information;
FIG. 7 is a diagram to show yet another example of the precoder based on the wideband information;
FIG. 8A and FIG. 8B are each a diagram to show an example of incremental feedback;
FIG. 9 is a diagram to show an example of relative UCI IDs;
FIG. 10 is a diagram to show an example of an RRC IE according to Embodiment 1-1-1;
FIG. 11 is a diagram to show an example of the incremental feedback according to Embodiment 1-1-1;
FIG. 12 is a diagram to show an example of a CSI field according to Embodiment 1-1-2;
FIG. 13 is a diagram to show an example of the incremental feedback according to Embodiment 1-1-2;
FIG. 14 is a diagram to show an example of the incremental feedback according to Embodiment 1-2-2-1;
FIG. 15 is a diagram to show an example of the incremental feedback according to Embodiment 1-2-2-2;
FIG. 16 is a diagram to show an example of the incremental feedback according to Option 1 of Embodiment 1-2-3;
FIG. 17 is a diagram to show an example of the incremental feedback according to Option 2 of Embodiment 1-2-3;
FIG. 18 is a diagram to show an example of the incremental feedback according to Option 1 of Embodiment 1-2-4;
FIG. 19 is a diagram to show an example of the incremental feedback according to Option 2 of Embodiment 1-2-4;
FIG. 20 is a diagram to show an example of the incremental feedback according to Option 3 of Embodiment 1-2-4;
FIG. 21 is a diagram to show an example of the relative UCI IDs;
FIG. 22 is a diagram to show an example of an RRC IE according to Embodiment 2-1-1;
FIG. 23 is a diagram to show an example of the incremental feedback according to Embodiment 2-1-1;
FIG. 24 is a diagram to show an example of a CSI field according to Embodiment 2-1-2;
FIG. 25 is a diagram to show an example of the incremental feedback according to Embodiment 2-1-2;
FIG. 26 is a diagram to show an example of the incremental feedback according to Embodiment 2-2-1;
FIG. 27 is a diagram to show an example of the incremental feedback according to Option 1 of Embodiment 2-2-2;
FIG. 28 is a diagram to show an example of the incremental feedback according to Option 1 of Embodiment 2-2-3;
FIG. 29 is a diagram to show an example of the incremental feedback according to Embodiment 3;
FIG. 30 is a diagram to show an example of an RRC IE according to Option 1 of Embodiment 4;
FIG. 31 is a diagram to show an example of the incremental feedback according to Option 1 of Embodiment 4;
FIG. 32 is a diagram to show an example of an RRC IE according to Option 2 of Embodiment 4;
FIG. 33 is a diagram to show an example of the incremental feedback according to Option 2 of Embodiment 4;
FIG. 34 is a diagram to show an example of the incremental feedback according to Embodiment 4;
FIG. 35 is a diagram to show an example of the incremental feedback according to Case 1 of Embodiment 5-2-1;
FIG. 36 is a diagram to show an example of the incremental feedback according to Case 2 of Embodiment 5-2-1;
FIG. 37 is a diagram to show an example of the incremental feedback according to Embodiment 5-2-2;
FIG. 38 is a diagram to show an example of a schematic structure of a radio communication system according to one embodiment;
FIG. 39 is a diagram to show an example of a structure of a base station according to one embodiment;
FIG. 40 is a diagram to show an example of a structure of a user terminal according to one embodiment; and
FIG. 41 is a diagram to show an example of a hardware structure of the base station and the user terminal according to one embodiment.

Description of Embodiments

(CSI Report (Reporting))

In Rel. 15 NR, a terminal (also referred to as a user terminal, a User Equipment (UE), or the like) generates (also described as determines, calculates, estimates, measures, or the like) channel state information (CSI), based on a reference signal (RS) (or a resource for the RS), and transmits (also described as reports, feeds back, or the like) the generated CSI to a network (for example, a base station). The CSI may be, for example, transmitted to the base station by using an uplink control channel (for example, a Physical Uplink Control Channel (PUCCH)) or an uplink shared channel (for example, a Physical Uplink Shared Channel (PUSCH)).

It is only necessary that the RS used for generation of the CSI be, for example, at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. Further, the SS may include at least one of a primary synchronization signal (PSS) and a secondary synchronization signal (SSS).

The CSI may include at least one parameter (CSI parameter), such as a channel quality indicator (CQI), a precoding matrix indicator (PMI), a CSI-RS resource indicator (CRI), an SS/PBCH block resource indicator (SS/PBCH Block Indicator (SSBRI)), a layer indicator (LI), a rank indicator (RI), an L1-RSRP (reference signal received power in layer 1 (Layer 1 Reference Signal Received Power)), L1-RSRQ (Reference Signal Received Quality), L1-SINR (a Signal-to-Noise and Interference Ratio or a Signal to Interference plus Noise Ratio), and an L1-SNR (Signal to Noise Ratio).

The UE may receive information (report configuration information) related to a CSI report, and control the CSI report, based on the report configuration information. The report configuration information may be, for example, a radio resource control (RRC) information element (IE) "CSI-ReportConfig". Note that, in the present disclosure, the RRC IE may be interpreted as an RRC parameter, a higher layer parameter, or the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent CSI report (Semi-Persistent CSI (SP-CSI)) report.

Further, the report quantity information may indicate at least one combination of the CSI parameters (for example, the CRI, the RI, the PMI, the CQI, the LI, the L1-RSRP, and the like).

Further, the resource information may be an ID of the resource for the RS. The resource for the RS may include, for example, a non-zero power CSI-RS resource or SSB, and a CSI-IM resource (for example, a zero power CSI-RS resource).

Further, the frequency domain information may indicate frequency granularity of the CSI report. The frequency granularity may include, for example, a wideband and a subband. The wideband is an entire CSI reporting band. The wideband may be, for example, an entire certain carrier (component carrier (CC), cell, serving cell), or may be an entire bandwidth part (BWP) in a certain carrier. The wideband may be interpreted as a CSI reporting band, an entire CSI reporting band (entire CSI reporting band), or the like.

Further, the subband is a part of the wideband, and may include one or more resource blocks (RBs) (or physical resource blocks (PRBs)). The size of the subband may be determined according to the size (number of PRBs) of the BWP.

The frequency domain information may indicate which of the PMI of the wideband or of the subband is to be reported (the frequency domain information may include, for example, an RRC IE *"pmi-FormatIndicator"* used for determining any of a wideband PMI report and a subband PMI report). The UE may determine frequency granularity of the CSI report (specifically, any of the wideband PMI report and the subband PMI report), based on at least one of the report quantity information and the frequency domain information.

When the wideband PMI report is configured (determined), one wideband PMI may be reported for the entire CSI reporting band. In contrast, when the subband PMI report is configured, a single wideband indication ii is reported for the entire CSI reporting band, and subband indication (one subband indication) $i_2$ of each of one or more subbands (for example, the subband indication of each subband) in the entire CSI report may be reported.

The UE performs channel estimation by using a received RS, and estimates a channel matrix H. The UE feeds back an index (PMI) that is determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the space domain, the CSI report may include one or more types of CSI. For example, the CSI may include at least one of a first type (type 1 CSI) that is used for selection of a single beam and a second type (type 2 CSI) that is used for selection of a multi-beam. The single beam may be interpreted as a single layer, and the multi-beam may be interpreted as a plurality of beams. Further, the type 1 CSI may not assume multi-user multiple input multiple output (MIMO), and the type 2 CSI may assume multi-user MIMO.

The codebook may include a codebook for the type 1 CSI (also referred to as a type 1 codebook or the like) and a codebook for the type 2 CSI (also referred to as a type 2 codebook or the like). Further, the type 1 CSI may include type 1 single panel CSI and a type 1 multi-panel CSI, and different codebooks (type 1 single panel codebook, type 1 multi-panel codebook) may be respectively defined.

In the present disclosure, "type 1" and "type I" may be interchangeably interpreted as each other. In the present disclosure, "type 2" and "type II" may be interchangeably interpreted as each other.

Uplink control information (UCI) types may include at least one of a Hybrid Automatic Repeat reQuest ACKnowledgement (HARQ-ACK), a scheduling request (SR), and CSI. The UCI may be carried on the PUCCH, or may be carried on the PUSCH.

In Rel. 15 NR, the UCI can include one CSI part for wideband PMI feedback. CSI report #n includes PMI wideband information if being reported.

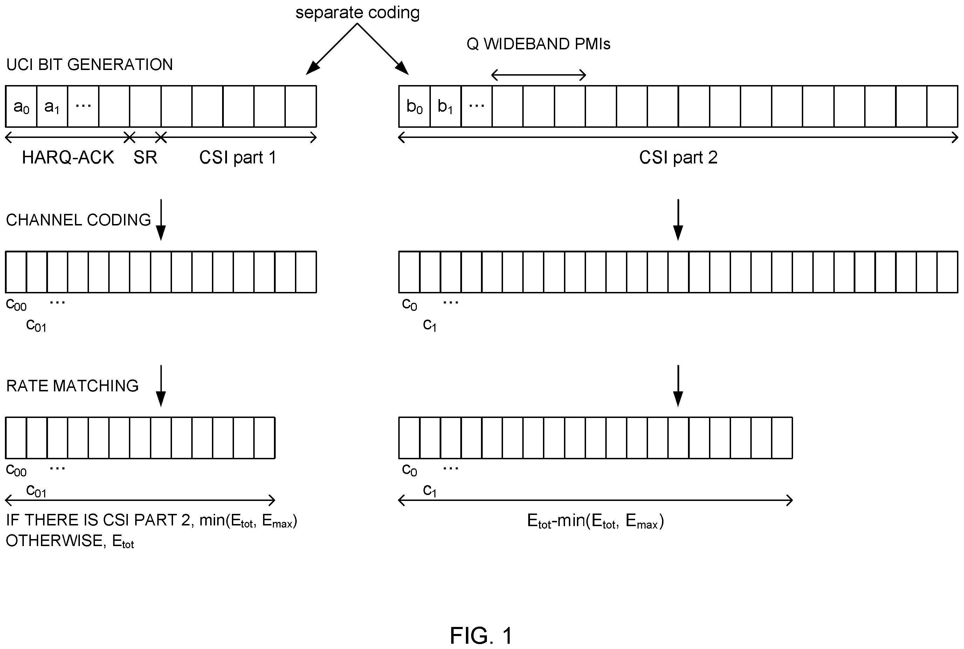

In Rel. 15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are coded independently of each other (FIG. 1).

For CSI part 1, Polar coding having a CRC of 6 or 11 bits is performed. The payload size of CSI part 1 after channel coding is larger than 11 bits. For CSI part 2, Reed-Muller coding is performed. The payload size of CSI part 2 after channel coding is equal to or less than 11 bits.

With CSI part 2, the length of CSI part 1 after rate matching is min $(E_{tot}, E_{max})$, and the length of CSI part 2 is $E_{tot}$ - min $(Etot, E_{max})$. Without CSI part 2, the length of CSI part 1 after rate matching is $E_{tot}$.

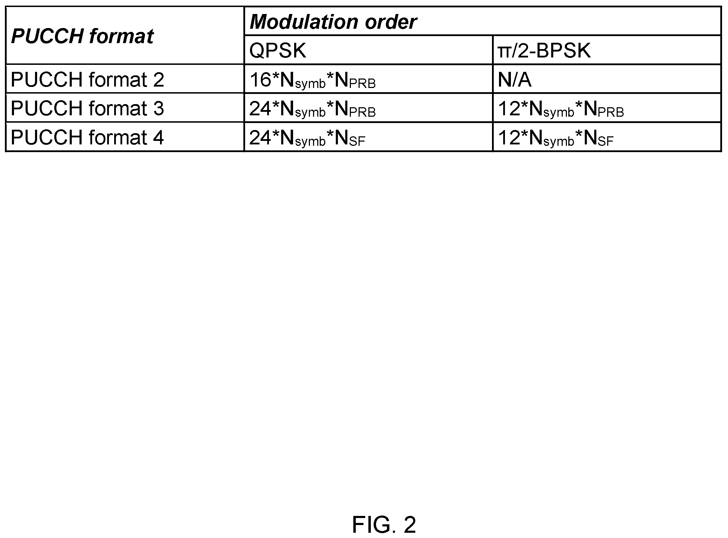

$E_{tot}$ is given by the table of FIG. 2. $N_{symb}$ is the number of symbols carrying the UCI in each PUCCH format. $N_{PRB}$ is the number of physical resource blocks (PRBs) determined by the UE in each PUCCH format. $N_{PRB}$ is determined by a UCI payload size. The maximum number of PRBs is set by RRC configuration.

$E_{max}$ is a maximum coding bit length for a coding rate not exceeding the maximum PUCCH coding rate.

If the actual coding rate exceeds a required value, CSI part 2 is dropped. If the actual coding rate still exceeds the required value, CSI part 1 is dropped.

The frequency granularity of the CSI report as described above is dependent on overhead of the uplink (UL). For example, a specific PUCCH format (for example, PUCCH format 0 or 2 including 1 or 2 symbols) can support only the type 1 CSI of the wideband. Further, by increasing the size of the subband as the CSI reporting band (for example, the size of the BWP), increase of UL overhead due to the report of the CSI (for example, the PMI) for each subband which is caused by the increase of the CSI reporting band is prevented.

In NR of Rel. 16 or later versions, it is assumed that the bandwidth wider than that of Rel. 15 NR is made available. Further, in NR of Rel. 16 or later versions, it is also assumed that a high frequency band (for example, a frequency band higher than any one of 7.125 GHz, 24.25 GHz, and 52.6 GHz, a frequency band higher than that of Rel. 15 NR) is made available. Note that the frequency band may be referred to as a frequency range (FR) or the like.

In Rel. 15 NR, the subband size is smaller than a coherence bandwidth (bandwidth whose size of frequency correlation is 90%), and thus precoding based on the subband is enabled. For example, when the CSI reporting band is 51 PRBs, the coherence bandwidth may be 40 PRBs, and the subband size may be 4 or 8 PRBs.

In contrast, when the CSI reporting band is wider than that of Rel. 15 NR, the subband size is larger than the coherence bandwidth, which may result in deterioration of report accuracy of the CSI. For example, it is assumed that, when the CSI reporting band is 260 PRBs, the subband size is 16 or 32 PRBs although the coherence bandwidth is 12 PRBs. In contrast, if the ratio between the CSI reporting band and the subband size is intended to be maintained as with the case of Rel. 15 NR (if the subband size is intended to be made sufficiently smaller than the coherence bandwidth), the UL overhead may be increased.

In this manner, in the future radio communication systems, increase of the UL overhead, reduction of reliability of the CSI, and the like present problems.

Incidentally, when at least one of the wider bandwidth and the higher frequency band than those of Rel. 15 NR is used, it is assumed that contribution to sparsity (property of being sparse) of a precoder (delay domain precoder) using the delay domain is higher than that of a precoder using the space domain and the frequency domain (space-frequency domain) in Rel. 15 NR.

In the light of this, the inventors of the present invention came up with the idea of feeding back information for a delay domain precoder (for example, at least one of delay information and coefficient information to be described later) as information (wideband information) related to the entire CSI reporting band (wideband), so as to prevent reduction of reliability of CSI while reducing increase of UL overhead.

(Delay Domain Precoder)

The information for a delay domain precoder to be fed back as the wideband information will mainly be described.

<Delay Domain Precoder>

The delay domain precoder may be generated (determined) based on at least one of the following parameters.

- Coefficient(s) (coefficient(s) for Q delays) g for Q delays (Q different delay values)
- Delays (delays for the coefficient(s)) $\tau$ for the coefficients g, or $\tau$ for quantized delays

Here, the coefficient g may be defined for each of the Q delays (for each delay). For example, $g \in C^{Q \times 1}$. Further, the delay $\tau$ for the coefficient g may be, for example, $\tau \in R^{Q \times 1}$. Here, $R^{Q \times 1}$ may be a set of Q non-quantized delays $\tau$. Further, $\tau$ for quantized delays may be, for example, $\tau \in N^{Q \times 1}$. Here, $N^{Q \times 1}$ may be a set of Q quantized delays $\tau$. Note that the delay may be interpreted as delay time, time, or the like.

The coefficient g may be transformed from the delay domain into the frequency domain by multiplying the coefficient g by a function of a corresponding delay $\tau$ and adding the multiplication results. The coefficient (element of the precoder) in the frequency domain may be obtained (derived) through the transformation from the delay domain into the frequency domain.

For example, a precoder d for N subcarriers based on the coefficient g and the delay $\tau$ may be expressed by the following expression 1. Note that, in expression 1, Q is the number of delays $\tau$ or coefficients g. q is an index of the delay $\tau$ or the coefficient g, and $0 \le q \le Q$. Further, n is an index of the subcarrier, and $0 \le n \le N$.

[Math. 1]

(Expression 1)

$$
d = \begin{bmatrix}
\sum_{q=0}^{Q-1} g_q \\
\vdots \\
\sum_{q=0}^{Q-1} g_q e^{-j2\pi n \tau_q} \\
\vdots \\
\sum_{q=0}^{Q-1} g_q e^{-j2\pi (N-1)\tau_q}
\end{bmatrix} \in \mathbb{C}^{N \times 1}
$$

Here, the coefficient of subcarrier #n (n-th subcarrier) in delay #q (q-th delay) transformed into the frequency domain may be expressed by the following expression 2. Further, power normalization may be expressed by the following expression 3.

[Math. 2]

(Expression 2)

$$
\sum_{q=0}^{Q-1} g_q e^{-j2\pi n \tau_q}
$$

(Expression 3)

$$
\sqrt{N}\, d/\|d\|
$$

For example, when the number Q of delays is 1, 2, and 3, precoders $d_{Q,n}$ of subcarrier #n ($0 \le n \le N$) may be expressed by the following expressions 4, 5, and 6, respectively.

[Math. 3]

(Expression 4)

$$IF\ Q\ =\ 1,\quad d_{1,n} = g_0 \cdot e^{-j2\pi n\tau_0}$$

(Expression 5)

$$IF\ Q\ =\ 2,\quad d_{2,n} = d_{1,n} + g_1 \cdot e^{-j2\pi n\tau_1}$$

(Expression 6)

$$IF\ Q\ =\ 3,\quad d_{3,n} = d_{2,n} + g_2 \cdot e^{-j2\pi n\tau_2}$$

For example, in expression 4, the number Q of delays = 1, and thus a precoder $d_{1,n}$ of subcarrier #n in delay #0 may be derived using multiplication results $g_0 \cdot e^{-j2\pi n\tau 0}$, which are obtained by multiplying a coefficient $g_0$ for delay #0 (q = 0) and a delay $\tau_0$ for coefficient #0.

Further, in expression 5, the number Q of delays = 1, and thus a precoder $d_{2,n}$ of subcarrier #n in delays #0 and #1 may be derived using addition results, which are obtained by adding the precoder $d_{1,n}$ of subcarrier #n in delay #0 and multiplication results $g_1 \cdot e^{-j2\pi n\tau 1}$ being obtained by multiplying a coefficient $g_1$ for delay #1 (q = 1) and delay $\tau_1$ for coefficient #1.

Further, in expression 6, the number Q of delays = 3, and thus a precoder $d_{3,n}$ of subcarrier #n in delays #0 to #2 may be derived using addition results, which are obtained by adding precoder $d_{2,n}$ of subcarrier #n in delays #0 and #1 and multiplication results $g_2 \cdot e^{-j2\pi n\tau 2}$ being obtained by multiplying a coefficient $g_2$ for delay #2 (q = 2) and a delay $\tau_2$ for coefficient #2.

In this manner, the coefficient g for a delay domain precoder may be transformed from the delay domain into the frequency domain by multiplying the coefficient g and a corresponding delay $\tau$. Further, the coefficient d in the frequency domain may be obtained by adding the transformed coefficient.

<CSI Report>

The UE may feedback one or more pieces of information (one or more pieces of wideband information) related to the entire CSI reporting band (wideband) to the base station. Specifically, the UE may estimate a channel in a certain domain, and determine the wideband information, based on the estimated channel (channel matrix).

For example, the UE may perform estimation of the channel in the space and frequency domain, and transform the estimated channel matrix into a transform domain. Alternatively, the UE may perform estimation of a channel in the transform domain.

Here, the transform domain may be, for example, a domain for a precoding scheme different from at least one of the time domain, the frequency domain, and the space domain. The transform domain may be, for example, a domain of any one or a combination of at least two of the following.

- Delay domain
- Delay-angle domain
- Delay-space domain
- Sparse domain
- Domain transformed or obtained from at least one of the frequency domain and the time domain
- Domain associated with at least one of the frequency domain and the time domain
- Domain related to at least one of a delay and an angle
- Domain having sparsity

<<Channel Estimation in Space and Frequency Domain>>

When the UE performs channel estimation in the space-frequency domain, the UE may transform the estimated channel (channel matrix) into the transform domain, and feedback information (channel information) related to the transformed channel (channel matrix) to the base station as the wideband information.

Alternatively, the UE may calculate the precoder in the transform domain, based on the channel (channel matrix) estimated in the space-frequency domain, and feedback information (precoder information) related to the transform precoder to the base station as the wideband information.

<<Channel Estimation in Transform Domain»

When the UE performs channel estimation in the transform domain, the UE may feedback information (channel information) related to the estimated channel (channel matrix) to the base station.

Alternatively, the UE may calculate the precoder in the transform domain, based on the channel (channel matrix) estimated in the transform domain, and feedback information (precoder information) related to the transform precoder to the base station as the wideband information.

<<Determination of Precoder (Channel) Vector»

The base station may multiply one or more pieces of wideband information (for example, the channel information or the precoder information), and thereby obtain (determine) a precoder vector (or a channel vector) in each subcarrier, each PRB, or a plurality of PRBs.

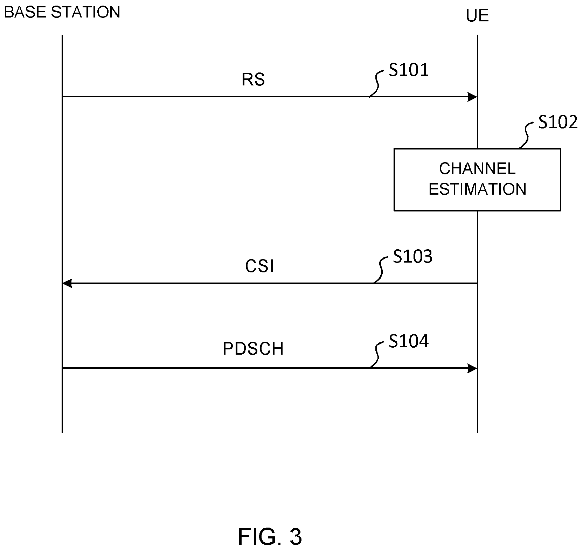

FIG. 3 is a diagram to show an example of operation of the CSI report according to the first aspect. As shown in the figure, in Step S101, the base station transmits the RS. In Step S102, the UE estimates a channel in a given domain (for example, the space-frequency domain, or the transform domain), based on the RS from the base station.

The UE determines channel information related to the estimated channel (channel matrix), or precoder information related to the precoder determined based on the estimated channel (channel matrix). Note that, as described above, when channel estimation is performed in the space-frequency domain, the channel information or the precoder information may be determined after changing the channel (channel upper column) estimated in the space-frequency domain into the transform domain.

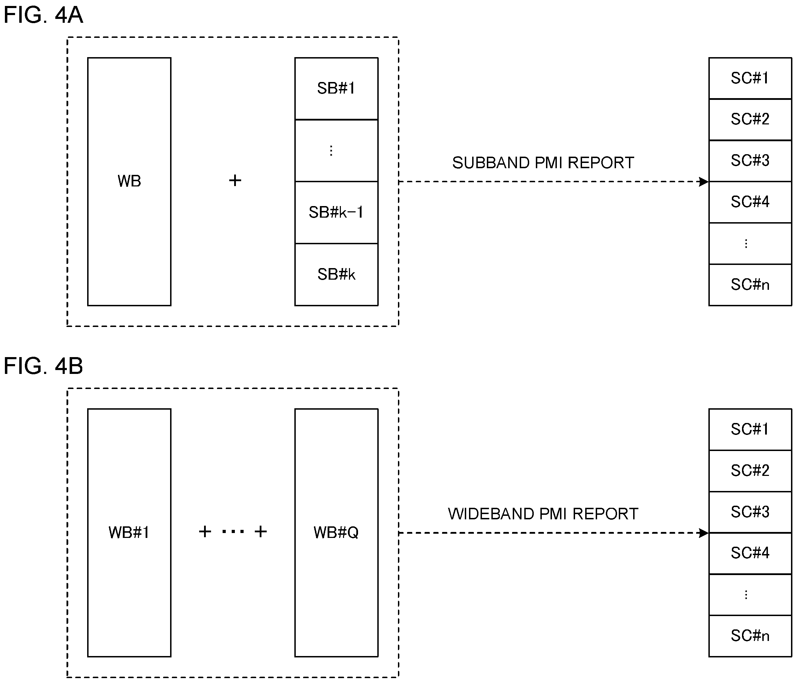

In Step S103, the UE transmits one or more pieces of wideband information (for example, one or more pieces of channel information or one or more pieces of precoder information). FIG. 4A and FIG. 4B are each a diagram to show an example of feedback of the wideband information according to the first aspect.

For example, as shown in FIG. 4A, the UE may feedback one piece of wideband information and information related to subband #1 to #k (k > 1) to the base station (which may be referred to as a subband PMI report or the like).

Further, as shown in FIG. 4B, the UE may feedback a plurality of pieces of wideband information #1 to #Q (1 < Q « k) to the base station (which may be referred to as a wideband PMI report or the like).

In Step S104 of FIG. 3, the base station may determine the precoding vector (or the channel vector) for each subcarrier, based on feedback information from the UE in Step S103. The UE may transmit a downlink shared channel (for example, a Physical Downlink Shared Channel) in the frequency domain and the space domain, based on the precoding vector (or the channel vector).

In this manner, in the present embodiment, based on the report configuration information (for example, the RRC IE "CSI-ReportConfig"), a single piece of wideband information and information related to each subband (for example, FIG. 4A) may be reported, or a plurality of pieces of wideband information (for example, FIG. 4B) may be reported. The UE may determine which of a single or plurality of pieces of wideband information is to be fed back, based on at least one of the report quantity information (for example, the RRC IE "reportQuantity") and the frequency domain information (for example, the RRC IE "pmi-FormatIndicator").

<Definition of Delay Domain Precoder>

<<First Definition>>

In the first definition, the delay domain precoder may be introduced by being replaced by a precoder based on the subband (subband-based precoder). Specifically, in a certain frequency range (FR), the subband-based precoder may not be supported, and the delay domain precoder may be supported.

The FR in which the subband-based precoder is not supported and the delay domain precoder is supported may be, for example, at least one of 7.125 GHz to 24.25 GHz (also referred to as FR3 or the like), 24.25 GHz to 52.6 GHz (also referred to as FR2 or the like), and 52.6 GHz to 114.25 GHz (also referred to as FR4 or the like). Note that the FR may be interpreted as a frequency band, a band, or the like.

The UE may receive configuration information (delay domain precoder configuration information) related to the delay domain precoder. The delay domain precoder configuration information may be supported instead of configuration information related to the subband-based precoder (subband-based precoder configuration information, for example, a parameter related to the subband in the RRC IE "reportFreqConfiguration") .

<<Second Definition>>

In the second definition, the delay domain precoder may be introduced in addition to the subband-based precoder. Specifically, in a certain FR, the subband-based precoder and the delay domain precoder may be supported.

The FR in which both of the subband-based precoder and the delay domain precoder are supported may be, for example, at least one of 410 MHz to 7.125 GHz (also referred to as FR1 or the like) and 24.25 GHz to 52.6 GHz (also referred to as FR2 or the like).

The UE may receive information (application information, for example, the RRC IE "pmi-FormatIndicator") indicating which of the subband-based precoder or the delay domain precoder is to be applied. The UE may receive at least one of the delay domain precoder configuration information and the subband-based precoder configuration information.

<CSI Parameter for Delay Domain Precoder>

In Rel. 15 NR, each CSI parameter may be calculated based on a given rule. The rule may be based on dependency between the CSI parameters. For example, the LI may be calculated based on the reported CQI, PMI, RI, and CRI. Further, the CQI may be calculated based on the reported PMI, RI, and CRI. Further, the PMI may be calculated based on the reported RI and CRI. The RI may be calculated based on the reported CRI.

In the first aspect, the CSI may include parameters for a delay precoder. The parameters for a delay precoder may include at least one of the following, for example.

- Information (coefficient information) related to the coefficient(s) g for Q delays (Q different delay values) (for example, $g \in C^{Q \times 1}$)
- Information related to delays $\tau$ for the coefficient(s) g (for example, $\tau \in R^{Q \times 1}$), or information related to quantized delays $\tau$ (for example, $\tau \in N^{Q \times 1}$); note that the information related to the delay $\tau$ for the coefficient g and the information related to the quantized delay $\tau$ are hereinafter collectively referred to as delay information.

Here, the total number Q of delays may be reported to the UE by using at least one of higher layer signaling (for example, RRC signaling) and physical layer signaling. For example, the delay domain precoder configuration information may include information indicating the total number Q of delays.

<<Delay Information>>

The delay information may be, for example, information indicating each delay $\tau$ (also referred to as a delay indicator (DI) or the like). The value of the q-th delay $\tau_q$ may not be quantized (non-quantized), or may be quantized.

In a case of not being quantized, for example, $\tau_q \in R$ and $\tau_q \geq 0$ may hold. Here, R may be a set of Q non-quantized delays $\tau$.

In contrast, in a case of being quantized, for example, $\tau_q = m \cdot T_{DP}$ may hold. Here, $m \in N$. N may be a set of Q quantized delays $\tau$. $T_{DP}$ may be a unit of quantization. For example, $T_{DP}$ may be a reciprocal of the bandwidth, specifically, 1/bandwidth. Note that the bandwidth may be the number of resource blocks constituting the bandwidth. The bandwidth in the wideband system is larger than that of the subband, and can thus make granularity finer by using $T_{DP}$.

The DI fed back as the CSI may indicate an offset between the delay $\tau_q$ and its contiguous delay $\tau_{q+1}$ (or $\tau_{q-1}$), may indicate a gap between the delay $\tau_q$ and the first delay $\tau_1$, or may indicate the amount of the delay $\tau_q$ itself. Note that the offset may be interpreted as a gap, an offset amount, a difference, or the like.

For example, when the DI indicates an offset between the delay $\tau_q$ and its contiguous delay $\tau_{q+1}$ (or $\tau_{q-1}$), the offset $\Delta\tau$ may be expressed by the following expression 7.

```
(Expression 7)

        Δτ = [Δτ₁, ..., Δτ_Q₋₁], where Δτ_q = τ_q₊₁ - τ_q (for example, 1 ≤ q ≤ Q
     - 1)
```

Further, when the DI indicates an offset between the delay $\tau_q$ and the first delay $\tau_1$, the offset $\Delta\tau$ may be indicated by the following expression 8.

(Expression 8)

$$\Delta\tau = [\Delta\tau_1, \ldots, \Delta\tau_{Q-1}], \text{ where } \Delta\tau_q = \tau_{q+1} - \tau_1 \text{ (for example, if } 1 \leq q \leq Q)$$

Further, when the DI indicates the amount of the delay $\tau_q$ itself, the delay $\tau$ may be indicated by the following expression 9.

(Expression 9)

$$\tau = [\tau_1, \ldots, \tau_Q], \text{ (for example, if } 1 \leq q \leq Q)$$

Note that the above expressions 7 to 9 are merely examples, and are not to be limited to the expressions shown in the above. For example, in expressions 7 to 9, the possible range of the index q of the delay $\tau$ may be $0 \leq q \leq Q - 2$ (or Q - 1). Further, expression 7 may be $\Delta\tau_q = \tau_q - \tau_{q-1}$, and in this case, $\tau_{q-1} = 0$ may hold. Further, expression 8 may be $\Delta\tau_q = \tau_q - \tau_0$ (for example, if $0 \leq q \leq Q - 1$).

<<Coefficient Information>>

The coefficient information may be, for example, information (delay precoding matrix indicator (DMI)) indicating a matrix for delay precoding, or may reuse an existing precoding matrix indicator (PMI).

For example, the DMI may explicitly or implicitly indicate the delay domain precoder. The DMI is defined separately from the existing PMI. Thus, the UE can report the CSI including the DMI to the base station without making any corrections to the existing PMI.

In contrast, the PMI in Rel. 15 NR may explicitly or implicitly indicate the delay domain precoder. In this case, existing signaling for the PMI can be reused.

The DMI or the PMI (DMI/PMI) may be information explicitly indicating the coefficient g, or may be information indicating the coefficient g on a codebook basis.

The DMI/PMI (1) may indicate amplitude and phase of the quantized coefficient g, (2) may indicate the quantized coefficient g, based on a modulation order (or a modulation scheme), or (3) may indicate the non-quantized coefficient g.

Alternatively, (4) one or more codebooks (for example, a plurality of codebooks of different sizes) may be defined. In this case, the DMI/PMI may indicate the coefficient g selected out of corresponding codebooks.

For example, it is assumed that the coefficient g is expressed by the following expression 10.

[Math. 4]

(Expression 10)

$$g = \begin{bmatrix} -0.7445 \\ -0.3364 - 0.5766i \end{bmatrix}$$

(1) Amplitude and Phase of Quantized Coefficient g

The amplitude of the coefficient g may be quantized based on a given number (for example, the number of bits) n. The quantization set may be defined by {1/2 ^ n, 2/2 ^ n, ..., 1} "0:1/(2 ^ n - 1):1". "0:1/(2 ^ n - 1):1" may indicate a set including 0 and 1 and a plurality of fractions in which the numerator of 1/(2 ^ n - 1) is incremented by one at a time from 0 to 1. For example, if n = 2, the quantization set may be {1/4, 1/2, 3/4, 1}. Further, if n = 3, the quantization set may be {1/8, 2/8, 3/8, 4/8, 5/8, 6/8, 7/8, 1}.

The UE may select a value (closet value) that is closest to the amplitude of the coefficient g out of the quantization set. For example, if n = 3 as in the above, the amplitude before and after the quantization may be expressed as follows.

[Math. 5]

$$\text{BEFORE QUANTIZATION: } \begin{bmatrix} 0.7445 \\ 0.6676 \end{bmatrix} \quad \text{AFTER QUANTIZATION: } \begin{bmatrix} 6/8 \\ 5/8 \end{bmatrix} \begin{bmatrix} 5/7 \\ 5/7 \end{bmatrix}$$

Further, the phase of the coefficient g may be quantized based on a given number (for example, the number of bits) m. The quantization set may be defined by {-π, -π + 1/2 ^ m * 2 * n, ..., -π + (2 ^ m - 1)/2 ^ m * 2 * π}. For example, if m = 2, the quantization set may be {-π, -π/2, 0, π/2}.

The UE may select a value (closet value) that is closest to the phase of the coefficient g out of the quantization set. For example, if m = 2 as in the above, the phase before and after the quantization may be expressed as follows.

[Math. 6]

$$\text{BEFORE QUANTIZATION:} \begin{bmatrix} \pi \\ -2/3\pi \end{bmatrix} \quad \text{AFTER QUANTIZATION:} \begin{bmatrix} 5/7 \\ 5/7 \end{bmatrix}$$

Note that it is only necessary that n be a specific value, and for example, n may be quantized as -π instead of -1/2π.

(2) Coefficient g Quantized based on Modulation Order

The quantization set based on the modulation order may be a constellation having 2 to the power of n values normalized by the maximum amplitude on the constellation. Here, n may be a given number (for example, each modulation order).

For example, if n = 2, Quadrature Phase Shift Keying (QPSK) may be used, and the quantization set may be {0.7071 + 0.7071i, 0.7071 - 0.7071i, -0.7071 + 0.7071i, -0.7071 - 0.7071i}.

Further, if n = 3, 16-quadrature amplitude modulation (QAM) (for example, QAM in which normalization is performed by $\sqrt{1 \cdot 8}$ ) may be used, and the quantization set may be {0.2357 + 0.2357i, 0.2357 + 0.7071i, 0.7071 + 0.2357i, 0.7071 + 0.7071i, 0.2357 - 0.2357i, 0.2357 - 0.7071i, 0.7071 - 0.2357i, 0.7071 - 0.7071i, -0.2357 + 0.2357i, -0.2357 + 0.7071i, -0.7071 + 0.2357i, -0.7071 + 0.7071i, -0.2357 - 0.2357i, -0.2357 - 0.7071i, -0.7071 - 0.2357i, -0.7071 - 0.7071i}.

The UE may select a value closest to the coefficient g out of the quantization set. For example, if n = 4 as in the above, the coefficient g before and after the quantization may be expressed as follows.

[Math. 7]

$$\text{BEFORE QUANTIZATION:} \begin{bmatrix} -0.7445 \\ -0.3364 - 0.5766i \end{bmatrix} \begin{bmatrix} 0.7445 \\ 0.6676 \end{bmatrix}$$

$$\text{AFTER QUANTIZATION:} \begin{bmatrix} 5/7 \\ 5/7 \end{bmatrix} \begin{bmatrix} -0.7071 + 0.2357i \\ -0.2357 - 0.7071i \end{bmatrix}$$

Alternatively, codebooks of different sizes may be defined. In this case, the DMI/PMI may indicate the coefficient g selected out of corresponding codebooks.

Note that QAM described above is not limited to 16-QAM only, and may include 64-QAM, 256-QAM, and the like.

(3) Codebook

One or more codebooks (for example, a plurality of codebooks of different sizes) may be defined. As the codebook, a discrete Fourier transform (DFT) matrix having a certain size (for example, a size of 2 to the power of n * 2 to the power of n) may be used. Here, n may be a given number (for example, the number of feedback bits).

For example, if n = 1, one or more matrices of 2 × 1 may be defined as the codebook (also referred to as a DFT codebook or the like). For example, the codebook may be expressed as follows.

[Math. 8]

$$[1\ 1;\ 1\ -1] * 1/\sqrt{2}$$

The UE may select a vector having a distance closest to the coefficient g in the codebook. For example, if n = 1 as in the above, the vector selected for the coefficient g (see the above expression 10) from the codebook may be expressed as follows. The coefficient g before and after the quantization may be expressed as follows.

[Math. 9]

$$\begin{bmatrix} 1 \\ -1 \end{bmatrix} * 1/\sqrt{2}$$

<Precoder Generation in Frequency Domain>

As described above, in Rel. 15 NR, when the subband PMI report is configured for the UE, the UE feeds back the wideband PMI and the subband PMI for each subband to the base station. The base station may determine a matrix $W_1$, based on the wideband PMI, and determine a matrix $W_2$ for each subband, based on the subband PMI for each subband.

The UE may determine a precoder matrix W used for precoding of downlink transmission (for example, the PDSCH), based on the matrices $W_1$ and $W_2$. For example, the precoder matrix may be calculated by the following expression 11.

(Expression 11)

$$W = W_1 W_2$$

In contrast, when the UE feeds back each piece of wideband information (for example, at least one of the coefficient information and the delay information), how to define the precoder d presents a problem.

In the first aspect, the precoder d (which may be obtained from the codebook g) in the frequency domain may be determined based on the coefficient g that is determined based on the coefficient information (for example, the DMI/PMI) and the delay $\tau$ that is determined based on the delay information (for example, the DI). For example, the precoder d may be determined by using the following expression 12.

[Math. 10]

(Expression 12)

$$\boldsymbol{d} = f(\boldsymbol{g}, \boldsymbol{\tau}) = \left[ \sum_{q=0}^{Q-1} g_q, \cdots, \sum_{q=0}^{Q-1} g_q e^{-j2\pi n \tau_q}, \cdots, \sum_{q=0}^{Q-1} g_q e^{-j2\pi (N-1)\tau_q} \right]^T \in \mathbb{C}^{N \times 1}$$

Here, Q is the total number of delays, and q is an index of the delay. N is the total number of subcarriers, and n is an index of the subcarrier.

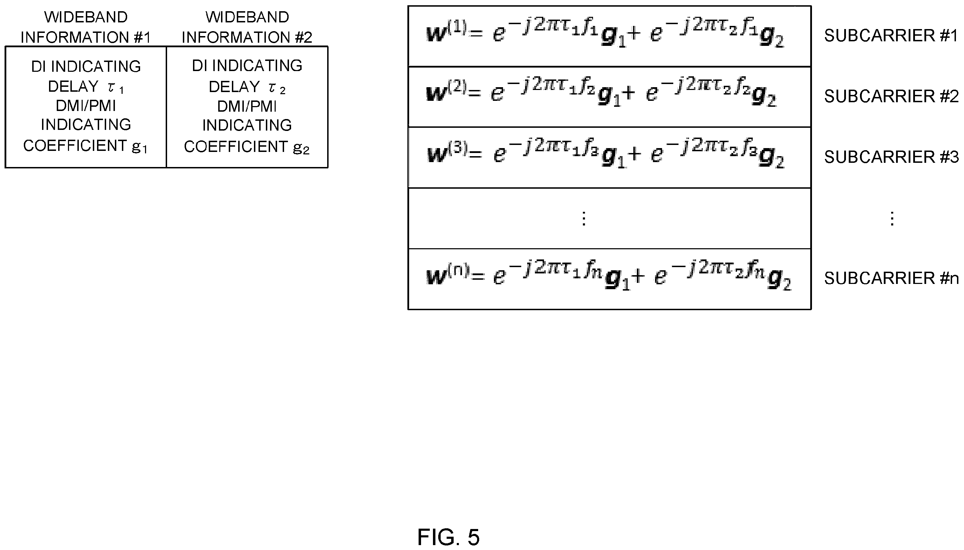

FIG. 5 is a diagram to show an example of the precoder based on the wideband information. In the figure, for example, a one-dimensional sparse transform domain precoder (1 dimension (1D)-sparse transform domain precoder) (space-delay domain precoder) may be used.

Further, in FIG. 5, as described with reference to FIG. 4B, m (m > 1, here, m = 2) pieces of wideband information are reported from the UE. Each piece of wideband information may include at least one of the delay information (for example, the DI) and the coefficient information (for example, the DMI/PMI).

For example, in FIG. 5, the total number Q of delays = 2, and pieces of wideband information #1 and #2 are reported from the UE to the base station. Wideband information #1 may include the DI indicating the delay $\tau_1$ and the DMI/PMI indicating the coefficient $g_1$ for the delay $\tau_1$. Further, wideband information #2 may include the DI indicating the delay $\tau_2$ and the DMI/PMI indicating the coefficient $g_2$ for the delay $\tau_2$. Note that the length (size) of $g_1$ and $g_2$ may be related to the number of antennas.

As shown in the figure, a precoder $W^{(i)}$ of subcarrier #i ($1 \le i \le n$) when Q = 2 may be determined based on at least one of the DI and the DMI/PMI included in each of the m pieces of wideband information.

For example, in the figure, the precoder $W^{(i)}$ is determined based on the delay $\tau_1$ indicated by the DI in wideband information #1 and the coefficient $g_1$ indicated by the DMI/PMI and the delay $\tau_2$ indicated by the DI in wideband information #2 and the coefficient $g_2$ indicated by the DMI/PMI.

Note that, in the figure, index #i of the subcarrier is $1 \leq i \leq n$. However, this is not restrictive, and index #i may be $0 \leq i \leq n - 1$.

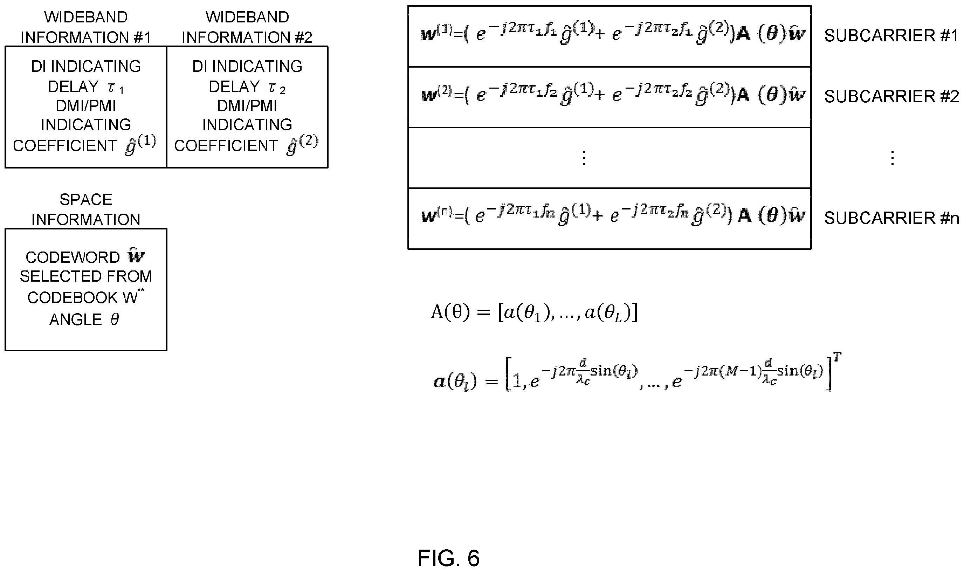

FIG. 6 is a diagram to show another example of the precoder based on the wideband information according to the first aspect. In the figure, for example, a two-dimensional sparse transform domain precoder (2 dimension (2D)-sparse transform domain precoder (TDP), angular-delay domain precoder) may be used. Further, in the figure, the precoders in the angle domain and the delay domain may be jointed.

In the figure, information related to the space (space information) is also reported from the UE as well as m (m > 1, here, m = 2) pieces of wideband information. Each piece of wideband information may include at least one of the delay information (for example, the DI) and the coefficient information (for example, the DMI/PMI).

The space information may include information related to at least one of a codeword w tilde ("~" is placed over w) selected from a codebook W** and an angle $\theta$. Note that the size of the codebook W** may be related to channel correlation.

As shown in the figure, the precoder $W^{(i)}$ of subcarrier #i ($1 \leq i \leq n$) when Q = 2 may be determined based on at least one of the DI and the DMI/PMI included in each of the m pieces of wideband information and the angle $\theta$ and the codeword w tilde determined by the space information.

For example, in the figure, the precoder $W^{(i)}$ is determined based on the delay $\tau_1$ indicated by the DI in wideband information #1 and a coefficient g tilde$^{(1)}$ indicated by the DMI/PMI, the delay $\tau_2$ indicated by the DI in wideband information #2 and a coefficient g tilde$^{(2)}$ indicated by the DMI/PMI, and the angle $\theta$ and the codeword w tilde determined by the space information. Note that, in the figure, the index i of the subcarrier is $1 \leq i \leq n$. However, this is not restrictive, and the index i may be $0 \leq i \leq n - 1$.

Here, A($\theta$) used for determination of the precoder $W^{(i)}$ of subcarrier #i ($1 \leq i \leq n$) in the figure may be defined by the following expression 13 and expression 14.

[Math. 11]

(Expression 13)

$$A(\theta) = [a(\theta_1), \dots, a(\theta_L)]$$

(Expression 14)

$$a(\theta_l) = \left[1, e^{-j2\pi\frac{d}{\lambda_C}\sin(\theta_l)}, \dots, e^{-j2\pi(M-1)\frac{d}{\lambda_C}\sin(\theta_l)}\right]^T$$

Here, M is the number of antennas or radio frequency (RF) chains. L (= Q) is the length of vectors $g_m$ and $\theta_m$. $g_{ml}$ and $\theta_{ml}$ are the l ($1 \leq l \leq L$)-th element of the vectors $g_m$ and $\theta_m$, respectively. d is an antenna space. Further, $\lambda_C$ is a wavelength.

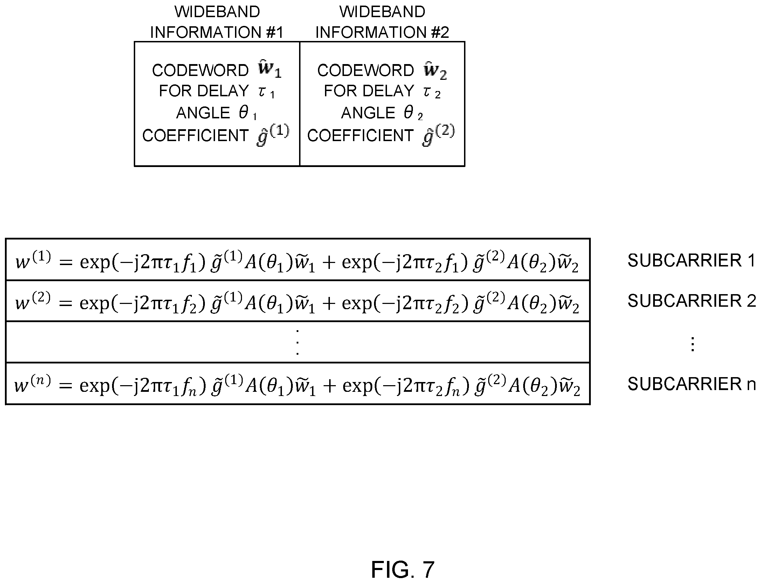

FIG. 7 is a diagram to show yet another example of the precoder based on the wideband information according to the first aspect. The figure may be different from FIG. 6 in that the precoders of the angle domain and the delay domain are separate. Further, the figure may be different from FIG. 6 in that the codeword and the angle $\theta$ are not common between the delays $\tau_q$, but the codeword and the angle $\theta$ are reported for each delay $\tau_q$ (specifically, for each piece of wideband information). The differences from FIG. 6 will mainly be described below.

In FIG. 7, m (m > 1, here, m = 2) pieces of wideband information are reported from the UE. Each piece of wideband information may include at least one of information (codeword information) related to the codeword for the delay $\tau$ and the information (angle information) related to the angle $\theta$, in addition to the delay information (for example, the DI) and the coefficient information (for example, the DMI/PMI).

As shown in FIG. 7, the precoder $W^{(i)}$ of subcarrier #i ($1 \leq i \leq n$) when L = 2 may be determined based on at least one of the DI and the DMI/PMI included in each of the m pieces of wideband information, and the angle $\theta$ determined based on the angle information and the codeword determined based on the codeword information.

For example, in FIG. 7, the precoder $W^{(i)}$ determined based on the delay $\tau_1$ indicated by the DI in wideband information #1, the coefficient $g_1$ indicated by the DMI/PMI, an angle $\theta_1$ and a codeword w tilde, the delay $\tau_2$ indicated by the DI in wideband information #2, the coefficient $g_2$ indicated by the DMI/PMI, and an angle $\theta_2$ and a codeword.

Note that A($\theta_1$) and A($\theta_2$) of FIG. 7 may be defined similarly to expression 12 and expression 13 in the above, respectively. Further, in FIG. 7, the index i of subcarrier is $1 \leq i \leq n$. However, this is not restrictive, and the index i may be $0 \leq i \leq n - 1$.

As described above, the UE feeds back each piece of wideband information including at least one of the delay information and the coefficient information. The base station determines the precoder for each subcarrier, based on each piece of wideband information. With this configuration, even if the wideband to be a report target of the CSI is further widened, reduction of reliability of the CSI can be prevented while reducing the UL overhead.

The feedback for the 2D sparse TDP described above may be a set of ($\tau$, g tilde), may be a set of ($\theta$, w tilde), or may be a combination of those. Here, the delay domain is a transform domain (transformed domain) of the frequency domain, and the angle domain is a transform domain (transformed domain) of the space domain.

$\tau$ represents a delay, and g tilde represents a coefficient in a corresponding delay. $\theta$ represents an angle, and w tilde represents a coefficient at a corresponding angle.

In each of the embodiments described below, examples using the feedback in the delay domain will be described. Specifically, with influence of both of ($\theta$, w tilde) and g tilde being merged into g, the UE feeds back ($\tau$, g). g represents coefficients of all of antennas or angles in corresponding delays.

For example, ($\tau_1$, g tilde$_1$), ($\tau_2$, g tilde$_2$), ($\theta_1$, w tilde$_1$), and ($\theta_2$, w tilde$_2$) may be first calculated by using two delays and two angles in the 2D sparse TDP. From these values, the UE may calculate $g_1$ and $g_2$ by using the following expression 15.

[Math. 12]

(Expression 15)

$$g_1 = \tilde{g}_1 * (a(\theta_1) * \tilde{w}_1 + a(\theta_2) * \tilde{w}_2)$$

$$g_2 = \tilde{g}_1 * (a(\theta_1) * \tilde{w}_1 + a(\theta_2) * \tilde{w}_2)$$

In this manner, the UE feeds back two of ($\tau_1$, $g_1$) and ($\tau_2$, $g_2$). Each of $g_1$ and $g_2$ may correspond to a PMI wideband information field (wideband PMI information). Each of $\tau_1$ and $\tau_2$ may correspond to a delay index (DI) (or a delay indicator) wideband information field (wideband DI information).

The UE may report ($\tau$, g tilde) and ($\theta$, w tilde). In the present disclosure, ($\tau$(DI), g (PMI)) may be interpreted as ($\tau$, g tilde), or may be interpreted as ($\theta$, w tilde).

(Feedback Method)

Here, feedback of a plurality of pieces of wideband information corresponding to a plurality of delays will be described. The plurality of pieces of wideband information may be transmitted in the same CSI reporting occasion, or may be transmitted in a plurality of CSI reporting occasions in a distributed manner.

To feed back (report) the plurality of pieces of wideband information in the same CSI reporting occasion may be referred to as "first wideband PMI feedback (report)", "first feedback (report)", a "first type", a "first feedback (report) type", a "first wideband feedback (report) type", or the like.

Note that the CSI reporting occasion may be interpreted as a feedback instance, a CSI report, a reporting occasion, a report instance, report timing, or the like. The plurality of pieces of wideband information may be included in the same uplink control information (UCI) (the same PUCCH or PUSCH).

In contrast, when the total number Q of delays is increased, the number of pieces of wideband information to be fed back in a single CSI reporting occasion is increased as well. In view of this, the plurality of pieces of wideband information corresponding to the plurality of delays may be fed back in a plurality of different CSI reporting occasions in a distributed manner.

To feed back as many pieces of wideband information as the total number Q of delays in a plurality of CSI reporting occasions in a distributed manner may be referred to as "incremental feedback", "second wideband PMI feedback (report)", "second feedback (report)", a "second type", a "second feedback (report) type", a "second wideband feedback (report) type", or the like.

In Rel. 15 NR, the report quantity information may indicate any one of 'none', 'cri-RI-PMI-CQI', 'cri-RI-i1', 'cri-RI-i1-CQI', 'cri-RI-CQI', 'cri-RSRP', 'ssb-Index-RSRP', and 'cri-RI-LI-PMI-CQI'. The UE may determine which CSI parameter is to be reported, based on the report quantity information. The report quantity information may be able to indicate (indicatable) at least one of 'DMI-DI' (DMI and DI), 'PMI-DI' (PMI and DI), 'DI' (DI), 'DMI' (DMI), and 'PMI' (PMI).

The UE may receive information indicating feedback (report) of at least one of delay information $\tau$ and coefficient information g. For example, the information may be the report quantity information (for example, the RRC IE "report-Quantity").

Further, the first wideband feedback type and the second wideband feedback type may be switched.

For example, the report quantity information (for example, the RRC IE reportQuantity) may indicate the wideband feedback type (for example, any one of the first and second wideband feedback types). Specifically, the report quantity information may be able to indicate (indicatable) at least one of 'DMI/PMI-DI-new' (to feed back the DMI/PMI and the DI with the first wideband feedback type), and 'DMI/PMI-DI-inc' (to feed back the DMI/PMI and the DI with the second wideband feedback type).

Alternatively, the UE may receive information (type information) related to which wideband feedback type is to be applied, separately from the report quantity information, and control switch of the first or second wideband feedback type, based on the type information.

The report quantity information and the type information may be reported to the UE by using at least one of higher layer signaling (for example, RRC signaling) and physical layer signaling (for example, DCI). For example, the report quantity information and the type information may be included in the report configuration information (for example, the RRC IE "CSI-ReportConfig").

According to the configuration method of the report quantity information described above, the UE can appropriately control feedback of at least one of the delay information $\tau$ and the coefficient information g, based on indication information (for example, the report quantity information) from the base station. Further, the UE can appropriately control configuration of the first or second wideband feedback, based on indication information (for example, the report quantity information or the type information) from the base station.

(Incremental Feedback)

The UE that uses incremental feedback (second wideband feedback type) of the CSI can feed back the CSI having fine granularity in at least one of the space and the frequency in a plurality of pieces of UCI. The base station (BS) synthesizes the CSI in the plurality of pieces of UCI, and can obtain the CSI having fine granularity in at least one of the space and the frequency and high performance, without the overhead being increased.

As specific incremental feedback methods, the following Options 1 and 2 are conceivable.

<Option 1>

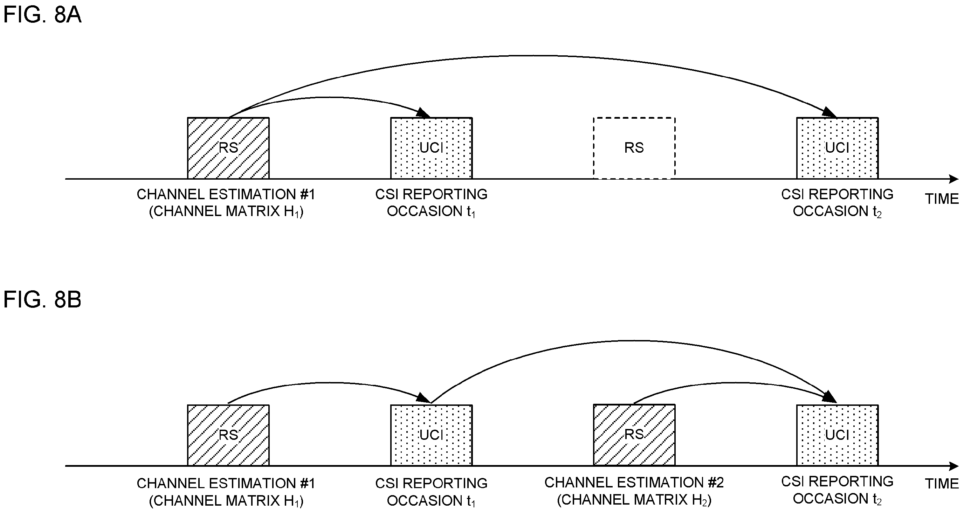

In the first time instance (reception occasion, RS resource, channel measurement, channel estimation #1), the UE determines the CSI having fine granularity regarding at least one of the space and the frequency. The CSI having fine granularity is divided into a plurality of parts. The plurality of parts are sequentially fed back in the plurality of pieces of UCI (for example, the first feedback, the second feedback, and the plurality of pieces of UCI contiguous to each other) (FIG. 8A).

The plurality of pieces of CSI (UCI) belonging to one incremental feedback may be based on one channel measurement (first channel measurement).

<Option 2>

In the first time instance, the UE determines the CSI having coarse or intermediate granularity regarding at least one of the space and the frequency, and feeds back the CSI in the first UCI (first feedback, CSI reporting occasion $t_1$). In the second time instance, the UE determines an incremental CSI part, based on the CSI corresponding to the second time instance (reception occasion, RS resource, channel estimation #2) and the CSI in the first UCI. The incremental CSI part is fed back in the second UCI (second feedback, CSI reporting occasion $t_2$) (FIG. 8B).

For example, in Option 2, the UE feeds back in three time instances. The first UCI includes channel estimation results $h_1$, $g_0$ and $\tau_0$ for $Q_0$ ($Q_1 + Q_2 + Q_3 <=$ Qo) delays, and $g_1 = [g_{0,1}, ..., g_{0,Q1}]$ and $\tau_1 = [\tau_{0,1}, ..., \tau_{0,Q1}]$ for $Q_1$ delays. The second UCI includes $g_2 = [g_{0,Q1+1}, ..., g_{0,Q1+Q2}]$ and $\tau_2 = [\tau_{0,Q1+1}, ..., \tau_{0,Q1+Q2}]$ for $Q_2$ delays. The third UCI includes $g_3 = [g_{0,Q1+Q2+1}, ..., g_{0,Q1+Q2+Q3}]$ and $\tau_3 = [\tau_{0,Q1+Q2+1}, ..., \tau_{0,Q1+Q2+Q3}]$ for $Q_3$ delays.

In one incremental feedback, the first CSI (UCI) may be based on the first channel measurement, and the second and subsequent CSI may be based on corresponding channel measurement of the first CSI and the second and subsequent CSI.

Each of the plurality of pieces of CSI (UCI) belonging to one incremental feedback may be based on at least first channel measurement.

In Rel. 15 NR, pieces of CSI information in the plurality of pieces of UCI are independently generated, and those are not jointly used. In contrast, in the incremental feedback, pieces of CSI information in the plurality of pieces of UCI are jointly used, and thus the CSI having finer granularity and higher performance can be obtained.

In actuality, detection failure (miss detection, undetected) of the UCI may occur. In the existing system, pieces of UCI are independently used, and thus detection failure of one piece of UCI does not have influence on other pieces of UCI.

However, the plurality of pieces of UCI in the incremental feedback are jointly used, and priority (order of priority) of the plurality of pieces of UCI is different. In this case, a detection failure of one piece of UCI has influence on other pieces of UCI.

In the incremental feedback, it is conceivable that influences of the plurality of pieces of UCI on performance are different. If those influences are different, how to enhance reliability and lower the probability of a detection failure of important UCI has not yet been made clear. Further, if the BS misses detection of one or a plurality of pieces of UCI for one incremental feedback, how operation is performed has not yet been made clear.

In the light of this, the inventors of the present invention came up with the idea of a method for enhancing reliability in the incremental feedback. Further, the inventors of the present invention came up with the idea of a report method for the detection failure in the incremental feedback.

The embodiments according to the present disclosure will be described below in detail with reference to the drawings. A radio communication method according to each embodiment may be applied individually, or may be applied in combination.

(Radio Communication Method)

For the CSI in each embodiment, the delay domain precoder may be used, or the delay domain may be used. For example, the present invention can also be applied to a precoder using the space-delay domain (also referred to as a one-dimensional transform domain precoder, a one-dimensional sparse transform domain precoder, a space-delay domain precoder, or the like), and a precoder using the angular-delay domain (also referred to as a two-dimensional transform domain precoder (2D-TDP), a two-dimensional sparse transform domain precoder (2D sparse TDP), an angular-delay domain precoder, or the like) as appropriate. The angle may be the angle of arrival or the angle of departure.

In the present disclosure, a precoder and precoding may be interchangeably interpreted as each other. Further, a precoding vector, a precoding matrix, a channel vector, and a channel matrix may be interchangeably interpreted as each other. Further, delay may be interpreted as the amount of delay (delay amount) or the like. Further, the delay domain may be interpreted as the transform domain to be described later, or one or more domains defined as the transform domain.

In the present disclosure, a wideband PMI, wideband PMI information, PMI wideband information, a PMI wideband information field, and wideband PMI feedback may be interchangeably interpreted as each other. In the present disclosure, a DI, a wideband DI, wideband DI information, DI wideband information, a DI wideband information field, and wideband DI feedback may be interchangeably interpreted as each other.

In the present disclosure, CSI report #n in CSI part m and CSI part m of CSI report #n may be interchangeably interpreted as each other.

In the present disclosure, an incremental feedback (IF), a group, a UCI group, a CSI group, and a CSI report group may be interchangeably interpreted as each other. In the present disclosure, CSI, a PMI, a DMI, a CSI part, a CSI report, and a CSI report configuration may be interchangeably interpreted as each other.

In the present disclosure, channel measurement, channel estimation, and CSI generation may be interchangeably interpreted as each other.

In the present disclosure, an indicator and an indication may be interchangeably interpreted as each other. In the present disclosure, to feed back, to report, to indicate, and to notify (signal, inform) may be interchangeably interpreted as each other. In the present disclosure, to configure, to indicate, and to notify (signal, inform) may be interchangeably interpreted as each other. In the present disclosure, an information element, a parameter, an indicator, and a field may be interchangeably interpreted as each other.

In the present disclosure, a BS, a network (NW), a gNB, and a transmission/reception point (TRP) may be interchangeably interpreted as each other.

<Embodiment 1>

For one incremental feedback, relative UCI IDs (ID, CSI subreport ID, subreport ID, sub-report ID, subCSI report) in one CSI report ID may be defined.

With IDs of a plurality of pieces of UCI for one incremental feedback being defined by the relative UCI IDs in one CSI report ID, reliability of the important UCI is enhanced.

The UE may determine a plurality of pieces of CSI (UCI) corresponding to one incremental feedback and IDs respectively corresponding to the plurality of pieces of CSI. The UE may transmit each of the plurality of pieces of CSI in occasions corresponding to the IDs.

The number of CSI feedbacks for one incremental feedback and resources of the PUCCH or the PUSCH corresponding to the plurality of pieces of UCI may be reported by at least one of RRC, a MAC CE, and DCI.

<<Embodiment 1-1>>

Here, IDs and related signaling are defined.

The IDs of the plurality of pieces of UCI for one incremental feedback may be defined by the relative UCI IDs in one CSI report ID. The IDs of the plurality of pieces of UCI may be reported to the UE by being included in at least one parameter of RRC, a MAC CE, and DCI, or may be determined by the UE and then explicitly or implicitly reported to the BS. The IDs of the plurality of pieces of UCI may be defined as UCI numbers in one incremental feedback.

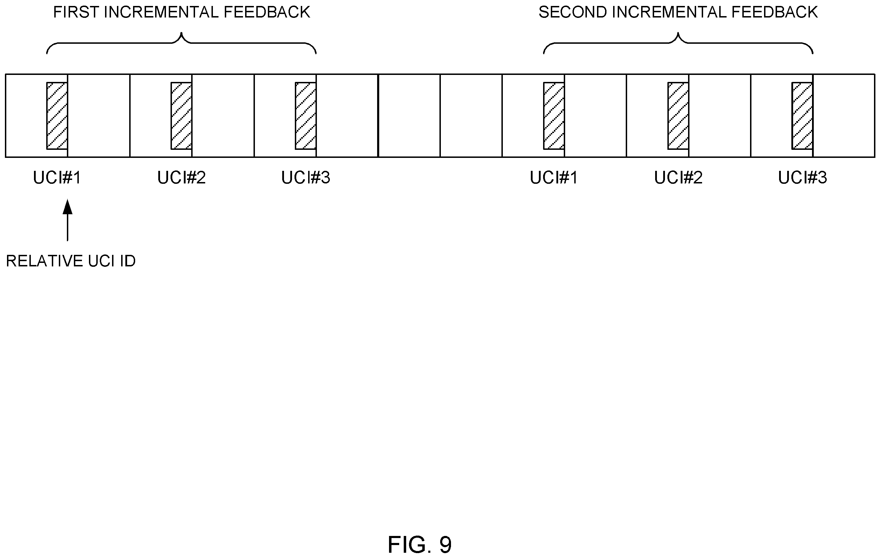

For example, as shown in FIG. 9, the number of CSI feedbacks for one incremental feedback may be configured to be three. For the three pieces of UCI in each incremental feedback, #1 to #3 may be given as the relative UCI IDs.

[Embodiment 1-1-1]

The IDs of the plurality of pieces of UCI for one incremental feedback may be explicitly reported by at least one parameter of RRC, a MAC CE, and DCI.

The relationship between the UCI IDs and the resources of the PUCCH or the PUSCH may be explicitly or implicitly reported by at least one of RRC, a MAC CE, and DCI. It may be assumed that the PUCCH resources for the incremental feedback are known to both of the BS and the UE.

After the reporting of the relationship, the UE may know the UCI IDs and corresponding resources of the PUCCH or the PUSCH for one incremental feedback.

The plurality of pieces of UCI for one incremental feedback may be transmitted on corresponding resources of the PUCCH or the PUSCH.

[[Option 1]]

The UCI need not include the IDs. Specifically, the UCI IDs need not be reported by the UE. In the BS, the UCI IDs may be implicitly obtained based on the resources of the PUCCH or the PUSCH and the relationship between the UCI IDs and the resources.

[[Option 2]]

The UCI may include the IDs. Specifically, the UCI IDs may be reported by the UE. In the BS, the UCI IDs may be explicitly obtained.

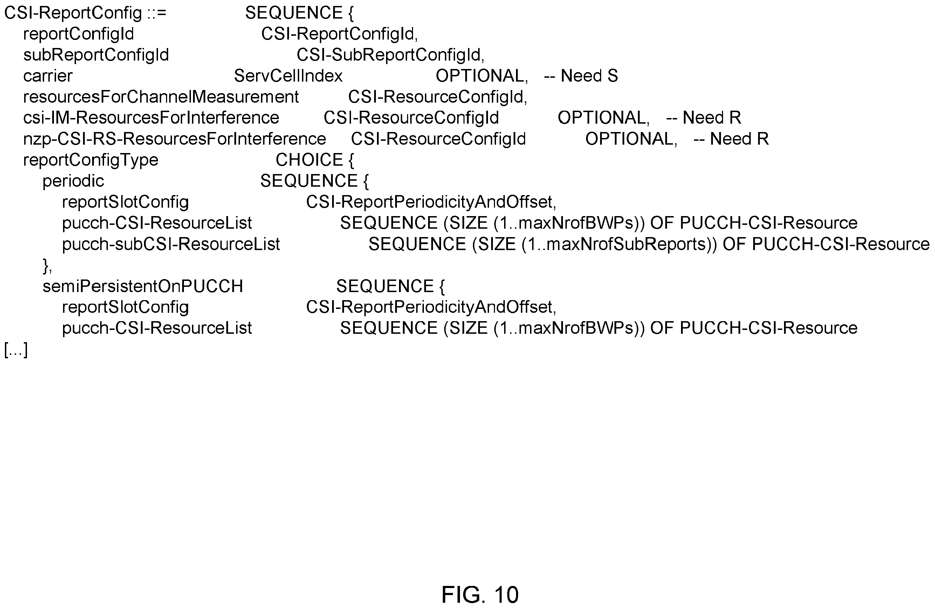

For example, as shown in FIG. 10, the UCI IDs and the PUCCH resources for the incremental feedback may be configured by RRC.

In RRC, an information element (for example, CSI-subReportConfigId) indicating the UCI IDs and an information element (pucch-subCSI-ResourceList) indicating corresponding PUCCH resources may be defined. An ID (CSI-ReportConfigId) indicating the CSI report (CSI report configuration, increment feedback), an ID (CSI-subReportConfigId) indicating the UCI in the CSI report, a list (pucch-CSI-ReportList) of PUCCH resources used for the CSI report, and an RRC parameter of a list (pucch-subCSI-ReportList) of PUCCH resources used for the UCI may be configured for the UE.

When the UE receives the RRC configuration, the UE may transmit the UCI having a resource of the PUCCH or the PUSCH having ID n without indicating ID n in the n-th UCI. In the BS, the ID of each piece of UCI may be obtained based on the PUCCH resource.

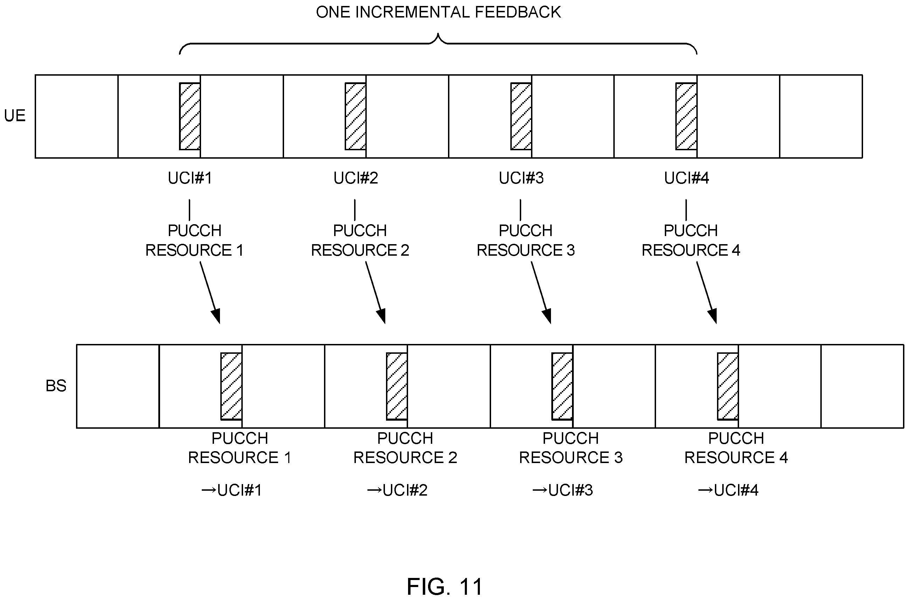

For example, as shown in FIG. 11, the UE may transmit pieces of UCI #1 to #4 for one incremental feedback. The UE may transmit each piece of UCI by using a corresponding PUCCH resource. The BS may obtain the ID of each piece of UCI, based on the PUCCH resource used in reception.

[Embodiment 1-1-2]

The ID of each piece of UCI for one incremental feedback may be determined in the UE, and explicitly or implicitly or jointed to be reported to the BS.

The ID of one CSI report may be reported by the parameter in at least one of RRC, a MAC CE, and DCI. The incremental feedback may be enabled depending on which parameter (for example, the number of CSI feedbacks in one incremental feedback) is reported.

For one incremental feedback, the resources (or a resource set) of the PUCCH or the PUSCH may be explicitly or implicitly reported by at least one of RRC, a MAC CE, and DCI. It may be assumed that the PUCCH resources for the incremental feedback are known to both of the BS and the UE.

After the reporting of the resources, the UE may know the UCI IDs and corresponding resources of the PUCCH or the PUSCH for one incremental feedback.

The plurality of pieces of UCI for one incremental feedback may be transmitted on corresponding resources of the PUCCH or the PUSCH.

[[Option 1]]

The UCI need not include the IDs. Specifically, the UCI IDs need not be reported by the UE. The default mapping relationship between the UCI IDs and the resources of the PUCCH or the PUSCH in one incremental feedback may be defined in advance. In the BS, the UCI IDs may be implicitly obtained based on the resources of the PUCCH or the PUSCH and the relationship between the UCI IDs and the resources defined in advance.

For example, similarly to FIG. 11 described above, the incremental feedback may be enabled, and the number of CSI feedbacks for one incremental feedback may be configured to be four. When the incremental feedback is enabled, the relationship between the UCI IDs and the PUCCH resources defined in advance may be known to both of the UE and the BS. In the BS, the ID of each piece of UCI may be obtained based on the PUCCH resource.

[[Option 2]]

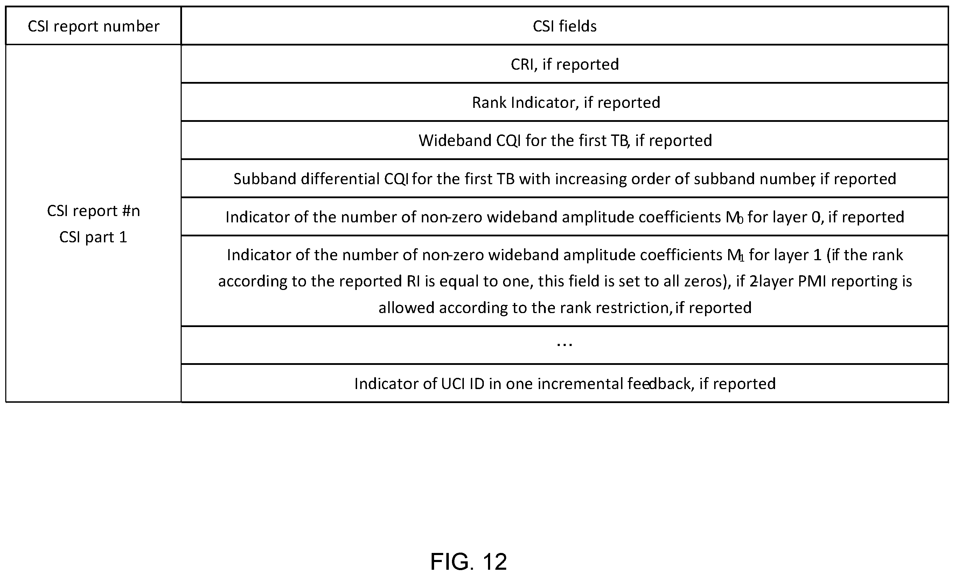

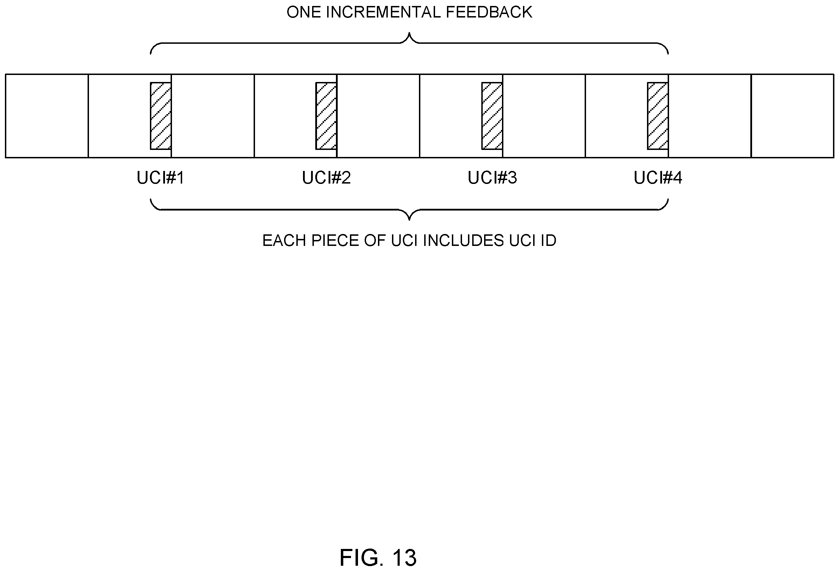

The UCI may include the IDs. Specifically, the UCI IDs may be reported to the UE by adding a new field in a CSI field. In the BS, the UCI IDs may be explicitly obtained. For example, as shown in FIG. 12, a new line for the UCI ID may be inserted in any line in the CSI field in CSI part 1 of CSI report #n. As shown in FIG. 13, the UCI ID may be explicitly included in each piece of UCI.

<<Embodiment 1-2>>

Here, reliability of the important UCI is enhanced.

[Embodiment 1-2-1]

In the expression of a priority value $pri_{iCSI}$ of the CSI report, the UCI ID of one CSI report l may be added. Specifically, $pri_{iCSI}(y, k, c, s)$ may be changed into $pri_{iCSI}(y, k, c, s, l)$. $pri_{iCSI}(y, k, c, s, l)$ may be an increasing function of l.

For the incremental feedback, the UCI having a small ID may have a small priority value (high priority). The small priority value in the CSI field of the UCI indicates high reliability for the UCI having a small ID.

According to Embodiment 1-2-1, processing is simple, and increase of overhead can be prevented.

Existing $pri_{iCSI}$ is given by the following expression.

$$pri_{iCSI}(y, k, c, s) = 2N_{cells}M_s y + N_{cells}M_s k + M_s c + s$$

y = 0 for the aperiodic CSI report to be carried on the PUSCH, y = 1 for the semi-persistent CSI report to be carried on the PUSCH, y = 2 for the semi-persistent CSI report to be carried on the PUCCH, and y = 3 for the periodic CSI report to be carried on the PUCCH.

k = 0 for the CSI report carrying the L1-RSRP, and k = 1 for the CSI report not carrying the L1-RSRP.

c is a serving cell index. $N_{cells}$ is a value of a higher layer parameter maxNrofServingcells.

s is reportConfigID. $M_s$ is a value of a higher layer parameter maxNrofCSI-ReportConfigurations.

For example, with the IDs of the plurality of pieces of UCI in one incremental feedback being taken into consideration, the priority value may be changed.

$$pri_{iCSI}(y, k, c, s, l) = 2_{Ncells}L_s M_s y + N_{cells}L_s M_s k + L_s M_s c + L_s s + l$$

l may be a UCI ID, or may be CSI-subReportConfigID of one CSI report in one incremental feedback.

$L_s$ may be the number of UCI IDs for reportConfigID s. $L_s$ may be different depending on s.

[Embodiment 1-2-2]

In the incremental feedback, the important UCI (or the CSI having high priority) may be repeated (may be repeatedly transmitted).

According to the operation described above, reliability of the UCI having high priority in one incremental feedback can be enhanced.

[[Embodiment 1-2-2-1]]

The number of times of repetition of each piece of UCI in one incremental feedback may be explicitly reported by at least one of RRC, a MAC CE, and DCI, or may be implicitly reported by PUCCH resource allocation.

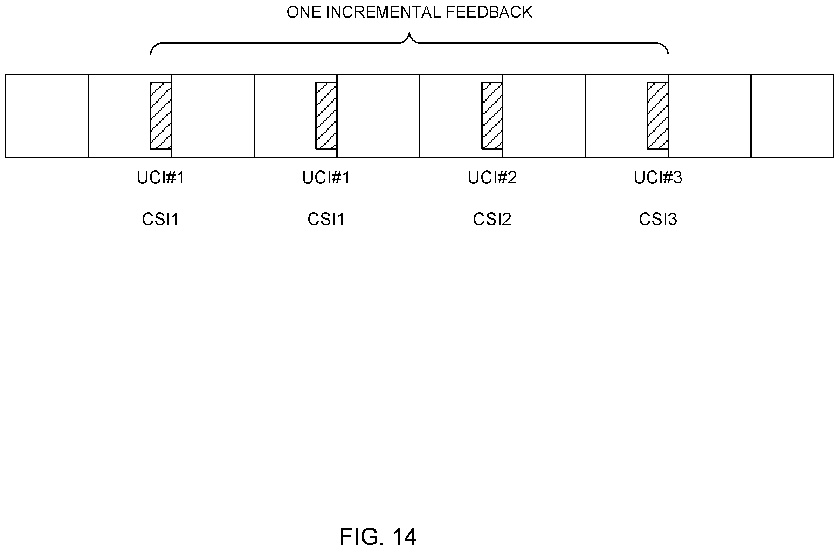

For example, as shown in FIG. 14, the UE may transmit pieces of UCI #1 to #3 (UCI ID = 1 to 3) in one incremental feedback. The pieces of UCI #1 to #3 may respectively include pieces of CSI 1 to 3. The UE may perform two repetitions of UCI #1 (CSI 1). CSI 1 in UCI #1 may have priority higher than that of CSI 2 in UCI #2 and CSI 3 in UCI #3.

[[Embodiment 1-2-2-2]]

The details of the CSI part in the UCI may be changed without at least one of the UCI ID and the resource allocation being changed. The UE may report to the BS that the CSI in the UCI is repetition of the CSI in the last UCI. The BS may know that pieces of CSI in UCI #1 and UCI #2 may be used together for the sake of high reliability.

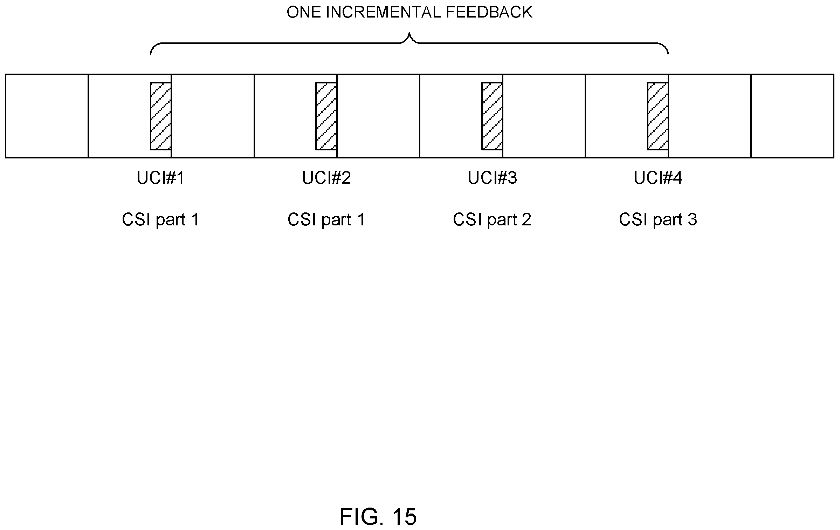

For example, as shown in FIG. 15, the UE may transmit pieces of UCI #1 to #4 (UCI ID = 1 to 4) in one incremental feedback. The pieces of UCI #1 to #4 may respectively include CSI part 1, CSI part 1, CSI part 2, and CSI part 3. The UE may perform two repetitions of CSI part 1 in UCI #1 and UCI #2. CSI part 1 may have priority higher than that of CSI part 2 in UCI #3 and CSI part 3 in UCI #4.

[Embodiment 1-2-3]

By at least one of increasing the PUCCH resources and reducing the maximum PUCCH coding rate, the coding rate of the important UCI (CSI part having high priority) may be lowered.

[[Option 1]]

At least one of the coding rate and the PUCCH resource or the CSI part having intermediate or low priority may be independent of at least one of the coding rate and the PUCCH resource for the CSI part having high priority.

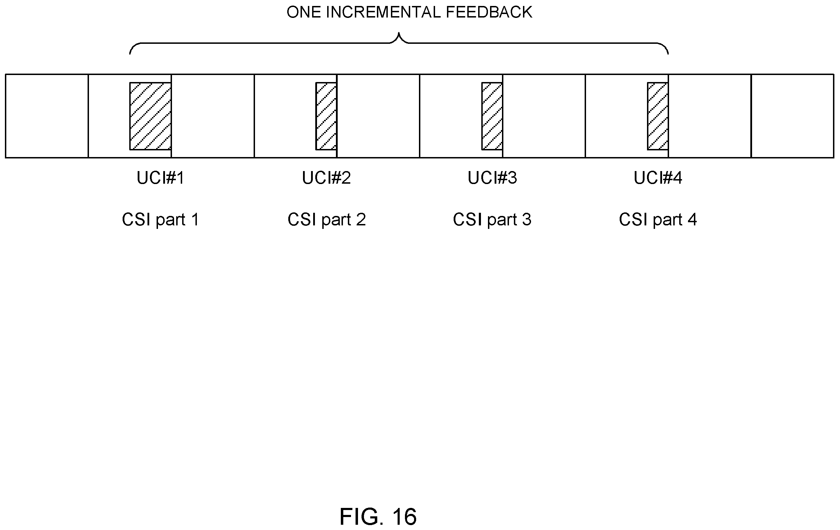

For example, as shown in FIG. 16, the pieces of UCI #1 to #4 (UCI ID = 1 to 4) may respectively carry CSI parts 1 to 4. The PUCCH resource for UCI #1 having high priority may be increased without the PUCCH resources for the pieces of UCI #2 to #4 being reduced.

According to the option described above, reliability of the UCI having high priority can be enhanced without reducing reliability of other UCI in one incremental feedback.

[[Option 2]]

At least one of the coding rate and the PUCCH resource for the CSI having intermediate or low priority may be dependent on at least one of the coding rate and the PUCCH resource for the CSI having high priority. For example, in order to maintain certain overhead for one incremental feedback, the PUCCH resource for the CSI having intermediate or low priority may be reduced.

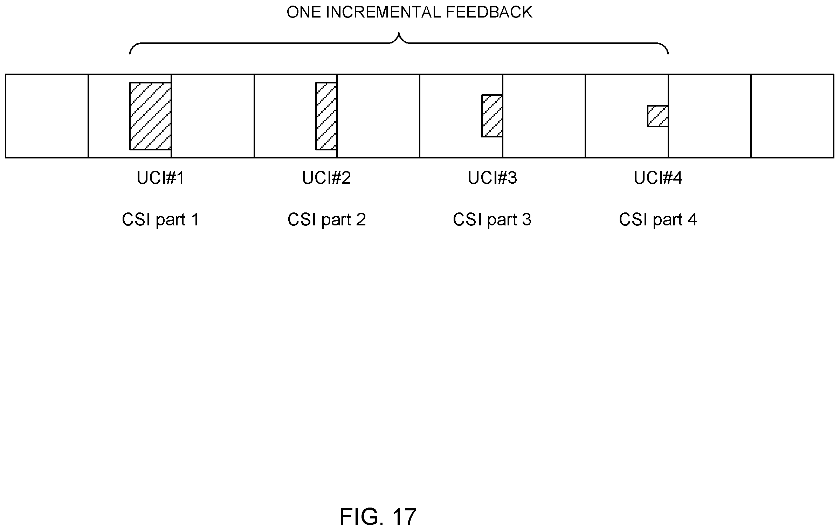

For example, as shown in FIG. 17, the pieces of UCI #1 to #4 (UCI ID = 1 to 4) may respectively carry CSI parts 1 to 4. The PUCCH resource for UCI #1 having high priority is increased, and the PUCCH resources for other pieces of UCI #2 to #4 are reduced. According to the priority of the UCI, a corresponding PUCCH resource may be reduced.

According to the option described above, similar overhead for one incremental feedback can be implemented.

[Embodiment 1-2-4]

The length (the number of bits before channel coding) of a bit sequence for the important UCI (CSI having high priority) may be reduced.

In this manner, reliability of the UCI having high priority can be enhanced.

[[Option 1]]

At least one of low resolution (coarse granularity) of quantization of the CSI or the PMI and the codebook having a small size may be used. The number of bits for each piece of UCI of one incremental feedback or the codebook (codebook size) may be explicitly or implicitly or jointed to be reported by at least one of RRC, a MAC CE, and DCI.

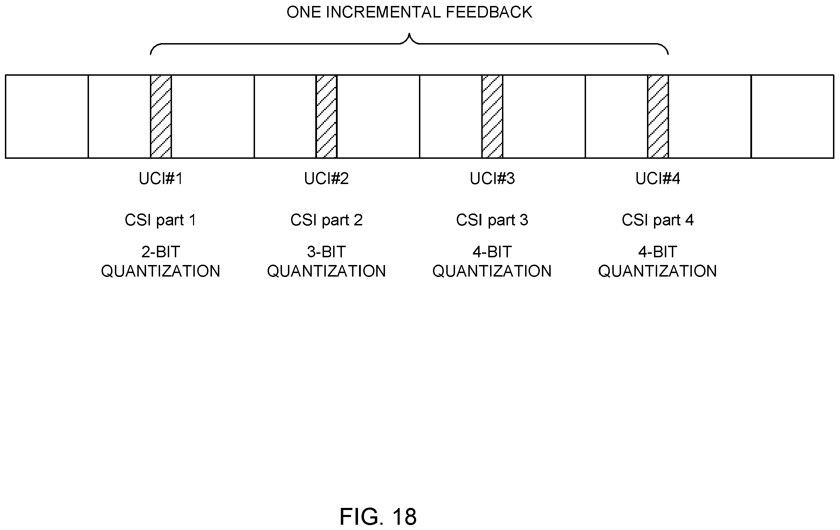

For example, as shown in FIG. 18, the pieces of UCI #1 to #4 (UCI ID = 1 to 4) may respectively carry CSI parts 1 to 4 (or pieces of CSI 1 to 4). Quantization granularity for the CSI having high priority may be reduced. Specifically, the number of bits of the important UCI may be reduced. UCI #1 whose priority is the highest priority (smallest priority value) may have the smallest number of bits (quantization granularity may be coarse).

[[[Option 1-1]]]

The quantization granularity (or the number of bits) of the CSI or the PMI and the codebook (set or size) may be reported by at least one of RRC, a MAC CE, and DCI.

[[[Option 1-2]]]

The quantization granularity (or the number of bits) of the CSI or the PMI and the codebook (set or size) may be determined by the UE, and reported to the BS in the UCI.

[[Option 2]]

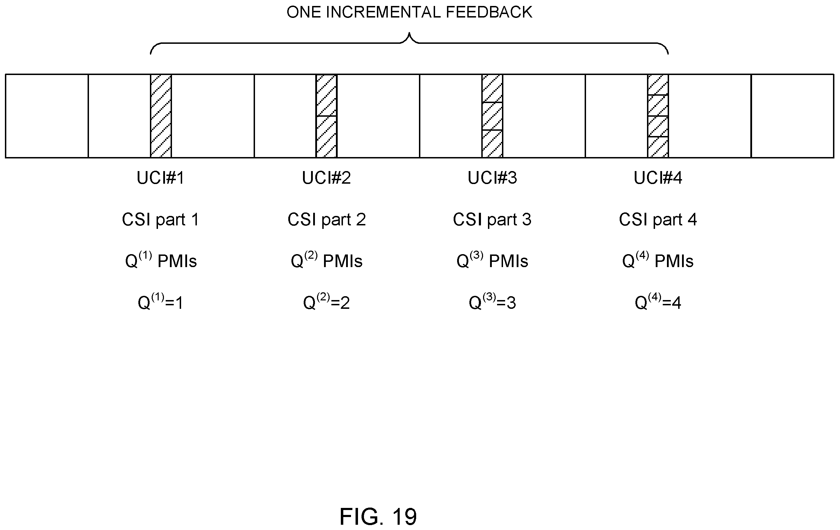

The number $Q^{(m)}$ of PMI feedbacks in the important UCI or the CSI having high priority may be reduced. m may be the number of the CSI part.
For example, as shown in FIG. 19, the pieces of UCI #1 to #4 (UCI ID = 1 to 4) may respectively carry CSI parts 1 to 4 (or pieces of CSI 1 to 4). The number of PMI feedbacks in the CSI having high priority (important UCI) may be reduced. CSI part 1 includes $Q^{(1)} = 1$ PMI, CSI part 2 includes $Q^{(2)} = 2$ PMIs, CSI part 3 includes $Q^{(3)} = 3$ PMIs, and CSI part 4 includes $Q^{(4)} = 4$ PMIs.

[[[Option 2-1]]]

$Q^{(m)}$ may be explicitly or implicitly or jointed to be reported by at least one of RRC, a MAC CE, and DCI.

[[[Option 2-22]]]

A set of values for $Q^{(m)}$ may be reported by at least one of RRC, a MAC CE, and DCI. The value of $Q^{(m)}$ may be selected by the UE, and reported to the BS in the UCI.

[[[Option 2-3]]]

$Q^{(m)}$ may be determined by the UE, and reported to the BS in the UCI.

[[Option 3]]

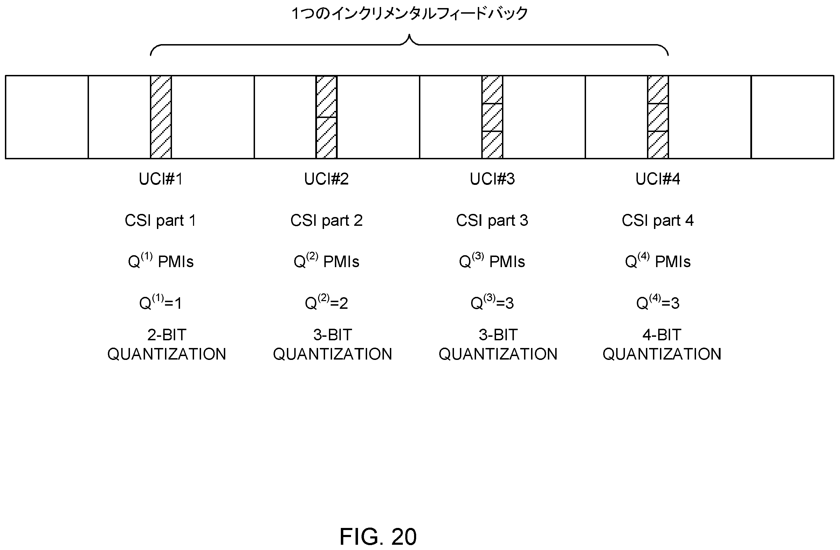

Option 1 and Option 2 may be combined. The low resolution (coarse granularity) of quantization of the CSI or the PMI or the codebook having a small size may be used, and the number $Q^{(m)}$ of PMI feedbacks in the important UCI (CSI having high priority) may be reduced.
For example, as shown in FIG. 20, the pieces of UCI #1 to #4 (UCI ID = 1 to 4) may respectively carry CSI parts 1 to 4 (or pieces of CSI 1 to 4). The number of PMI feedbacks in the CSI having high priority (important UCI) may be reduced. CSI part 1 includes $Q^{(1)} = 1$ PMI, and each PMI may use 2-bit quantization. CSI part 2 includes $Q^{(2)} = 2$ PMIs, and each PMI may use 3-bit quantization. CSI part 3 includes $Q^{(3)} = 3$ PMIs, and each PMI may use 3-bit quantization. CSI part 4 includes $Q^{(4)} = 3$ PMIs, and each PMI may use 4-bit quantization.

<Embodiment 2>

For one incremental feedback, absolute CSI report IDs may be defined.
With IDs of a plurality of pieces of UCI in one incremental feedback being defined by absolute CSI report IDs, reliability of the important UCI in one incremental feedback is enhanced.
The UE may determine a plurality of pieces of CSI (UCI) corresponding to a plurality of incremental feedbacks and IDs respectively corresponding to the plurality of pieces of CSI. The UE may transmit each of the plurality of pieces of CSI in occasions corresponding to the IDs.
The number of CSI feedbacks in one incremental feedback and resources of the PUCCH or the PUSCH corresponding to the plurality of pieces of UCI may be reported by at least one of RRC, a MAC CE, and DCI.

<<Embodiment 2-1>>

IDs and related signaling may be defined.

The IDs of the plurality of pieces of UCI in one incremental feedback may be defined by the absolute CSI report IDs. Indication that the plurality of CSI reports are for one incremental feedback may be reported by the UE in the UCI, explicitly by at least one of RRC, a MAC CE, and DCI.

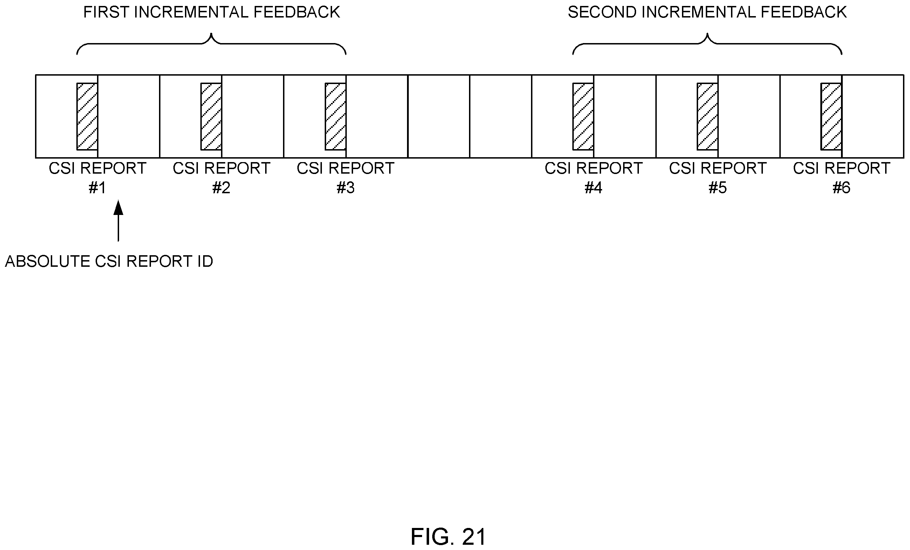

For example, as shown in FIG. 21, the number of CSI feedbacks for one incremental feedback may be configured to be three. CSI reports #1 to #3 (absolute CSI report ID = 1 to 3) are transmitted as the first incremental feedback, and CSI reports #4 to #6 (absolute CSI report ID = 4 to 6) are transmitted as the second incremental feedback.

[Embodiment 2-1-1]

Reporting that the plurality of CSI reports are for one incremental feedback may be explicitly included in at least one of RRC, a MAC CE, and DCI.

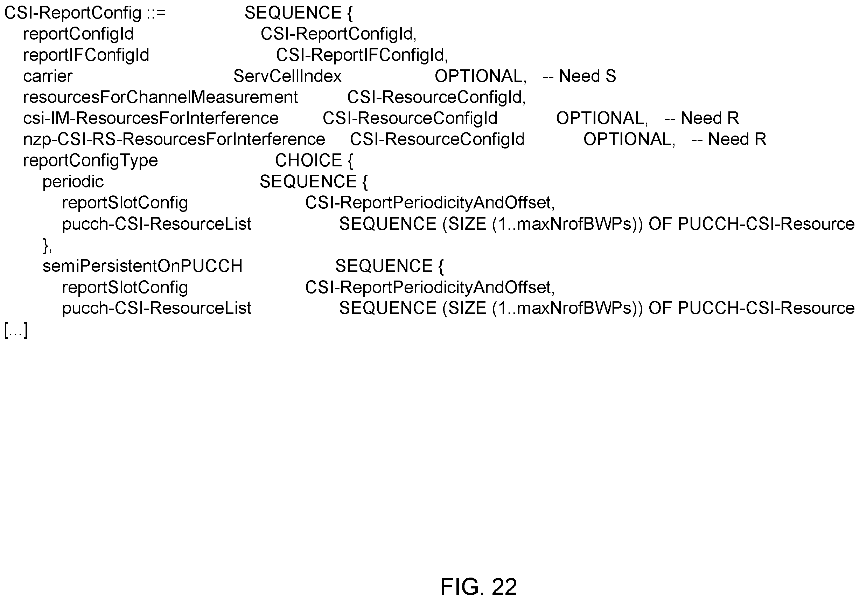

For example, as shown in FIG. 22, reporting that the plurality of CSI reports are for one incremental feedback may be explicitly included in RRC signaling.

In RRC, an information element CSI-ReportIFConfigId indicating the IDs of the incremental feedback (IF) may be defined (added). An ID (CSI-ReportConfigId) indicating the CSI report (CSI report configuration), an ID (CSI-ReportIFConfigId) indicating the incremental feedback to which the CSI report belongs, and an RRC parameter of a list (pucch-CSI-ResourceList) of PUCCH resources used for the CSI report may be configured for the UE.

When the UE receives the RRC configuration, the UE may know the CSI report ID (CSI-ReportConfigId, for example, #n+1, ..., n+q) for IF report #m, the number q of CSI feedbacks for IF report #m, and the PUCCH resources corresponding to the q feedbacks for IF report #m. The UE may transmit the first, second, ..., q-th pieces of UCI for IF report #m in the resources of the PUCCH or the PUSCH configured in CSI reports #n+1, #n+2, ..., #n+q.

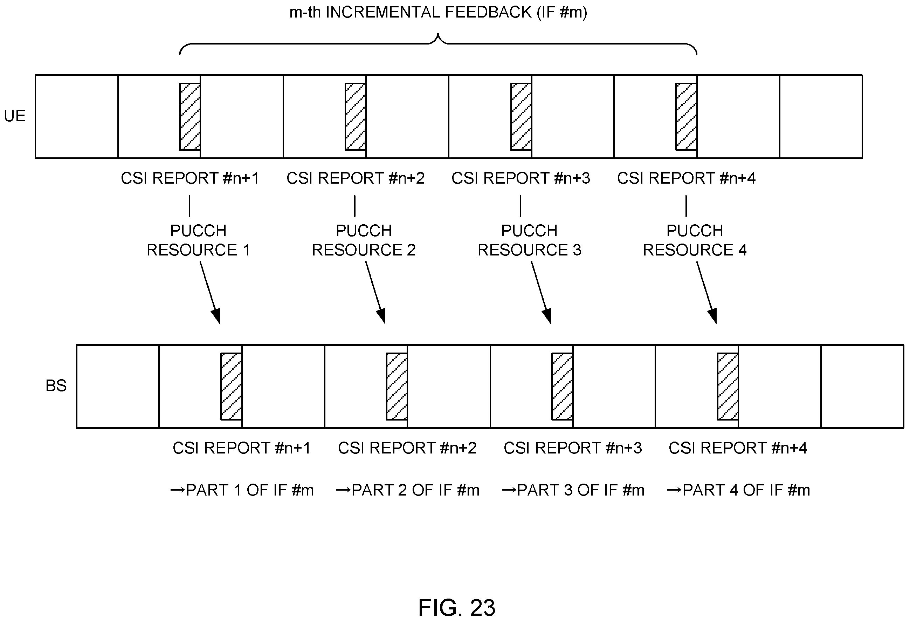

For example, as shown in FIG. 23, the UE may transmit CSI reports #n+1 to #n+4 in one incremental feedback #m. PUCCH resources 1 to 4 may be respectively used for CSI reports #n+1 to #n+4. The BS may obtain four parts of the CSI or the PMI respectively corresponding to CSI reports #n+1 to #n+4, and reconfigure the CSI having fine granularity.

[Embodiment 2-1-2]

Whether or not the plurality of CSI reports are for one incremental feedback may be determined by the UE, and explicitly reported to the BS.

The IDs of the CSI reports and corresponding resources of the PUCCH or the PUSCH may be configured by at least one parameter of RRC, a MAC CE, and DCI.

After the configuration, the UE may know the resources of the PUCCH or the PUSCH corresponding to the plurality of CSI reports.

The UE may determine whether or not to use the incremental feedback. When the incremental feedback is used, the number q of CSI parts for one incremental feedback, and ID m for the incremental feedback, and IDs #n+1, #n+2, ..., #n+q of the CSI reports used for the incremental feedback may be determined in the UE.

q CSI parts or pieces of CSI may be transmitted on the resources allocated to CSI reports #n+1, #n+2, ..., #n+q. The pieces of UCI of CSI reports #n+1, #n+2, ..., #n+q may include indicators of ID m of the incremental feedback.

Subsequently, the BS may know that the q CSI parts or pieces of UCI in CSI reports #n+1, #n+2, ..., #n+q belong to one incremental feedback, and reconfigure the CSI having fine granularity.

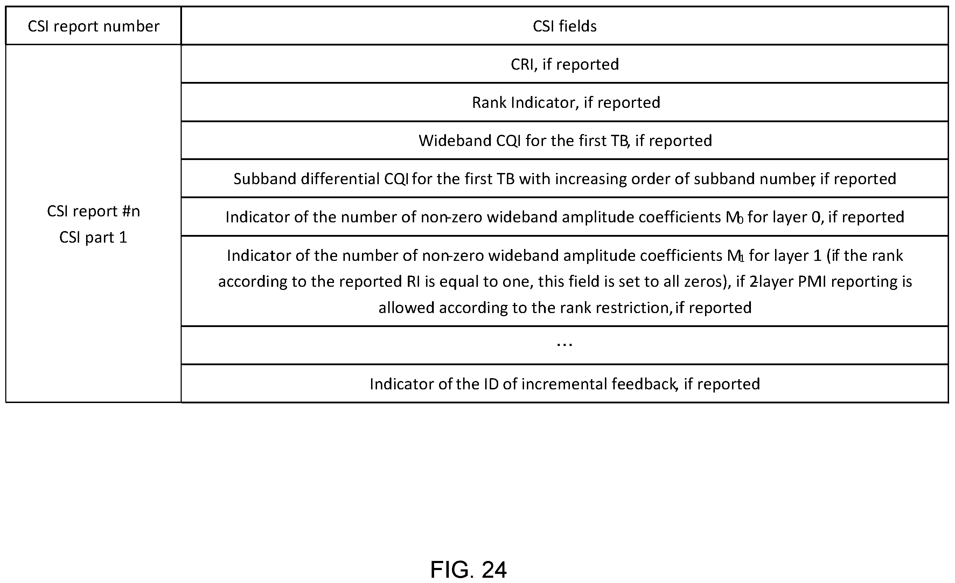

For example, as shown in FIG. 24, indication that the plurality of CSI reports are for one incremental feedback may be reported in the UCI. A new line for the ID of the incremental feedback may be inserted in any line in the CSI field in CSI part 1 of CSI report #n.

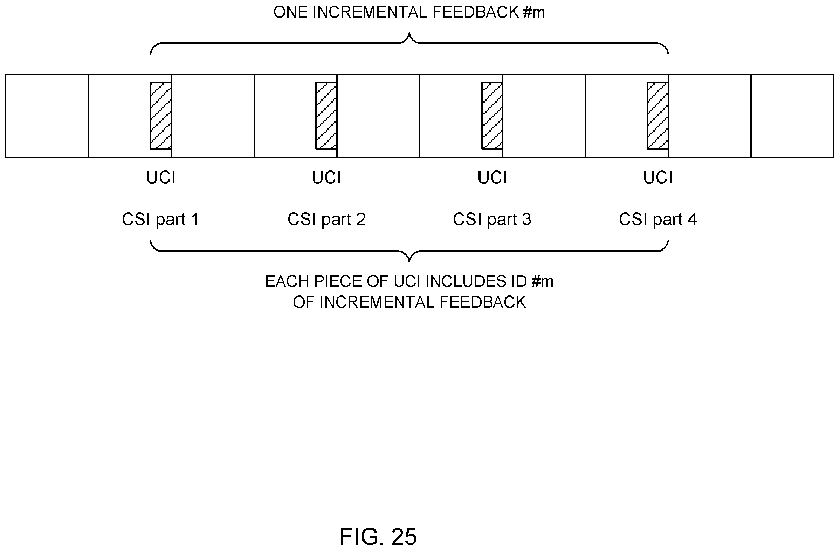

For example, as shown in FIG. 25, the UE transmits four pieces of UCI. CSI parts 1 to 4 belonging to one incremental feedback #m may be respectively included in the four pieces of UCI. ID #m of one incremental feedback may be included in each piece of UCI. In the BS, by using CSI parts 1 to 4 belonging to one incremental feedback, the CSI having fine granularity may be reconfigured.

<<Embodiment 2-2>>

In order to enhance reliability of the important CSI or UCI, the following Embodiments 2-2-1 to 2-2-3 may be used independently or in combination.

[Embodiment 2-2-1]

In the incremental feedback, the important UCI (or the CSI having high priority) may be repeated (may be repeatedly transmitted).

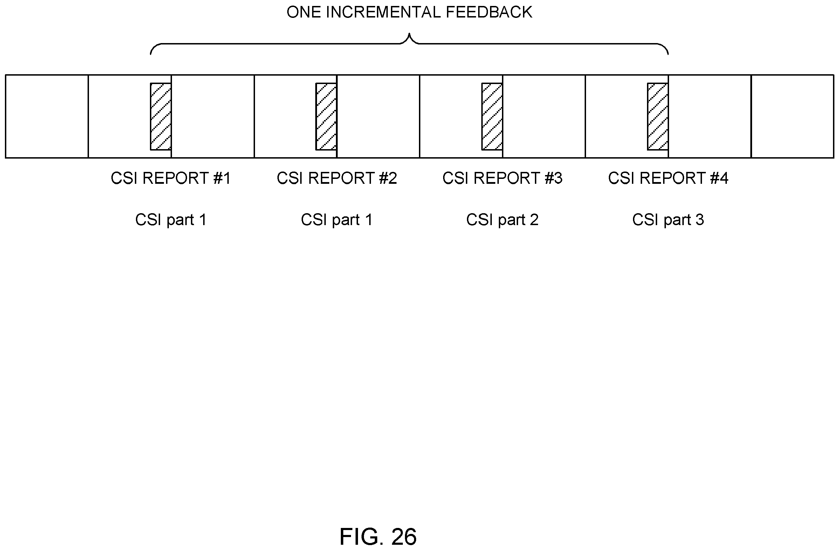

For example, as shown in FIG. 26, the UE may transmit CSI reports #1 to #4 (CSI report ID = 1 to 4) in one incremental feedback. CSI reports #1 to #4 may respectively include CSI part 1, CSI part 1, CSI part 2, and CSI part 3 (or CSI 1, CSI 1, CSI 2, and CSI 3). Two repetitions of CSI part 1 in CSI reports #1 and #2 may be performed. The CSI 1 may have priority higher than that of CSI part 2 in CSI report #3 and CSI part 3 in CSI report #4.

According to Embodiment 2-2-1 described above, reliability of the CSI or UCI having high priority in one incremental feedback can be enhanced.

[[Option 1]]

The number of times of repetition of each CSI part in one incremental feedback may be explicitly reported by at least one of RRC, a MAC CE, and DCI, or may be implicitly reported by PUCCH resource allocation. The UE may transmit the repeated CSI, based on the reporting.

[[Option 2]]

The number of times of repetition of each CSI part in one incremental feedback may be explicitly reported by at least one of RRC, a MAC CE, and DCI, or may be implicitly reported by PUCCH resource allocation. The UE may transmit the repeated CSI, based on the reporting.

[Embodiment 2-2-2]

By at least one of increasing the PUCCH resources and reducing the maximum PUCCH coding rate, the coding rate of the important UCI (CSI having high priority) may be lowered.

[[Option 1]]

At least one of the coding rate and the PUCCH resource for the CSI having intermediate or low priority may be independent of at least one of the coding rate and the PUCCH resource for the CSI having high priority.

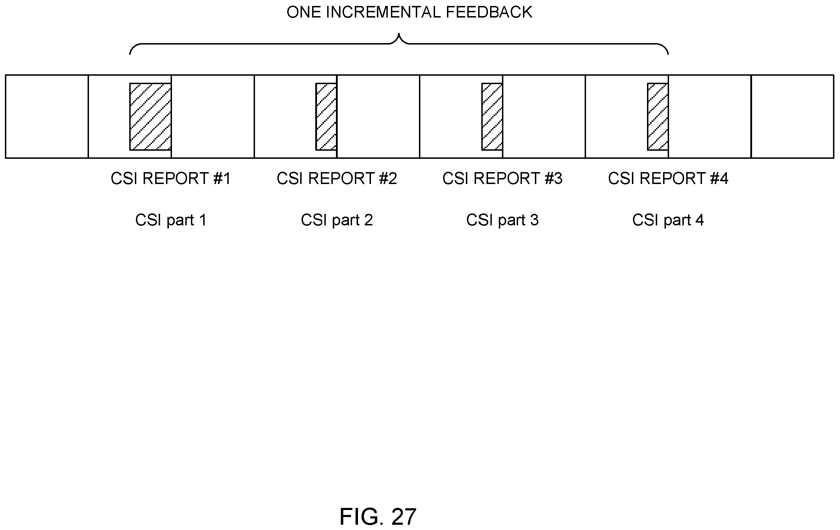

For example, as shown in FIG. 27, CSI reports #1 to #4 (CSI report ID = 1 to 4) in one incremental feedback may respectively include CSI parts 1 to 4 (or the pieces of CSI 1 to 4). The PUCCH resource for CSI report #1 having priority higher than that of CSI reports #2 to #4 may be increased without the PUCCH resources for CSI reports #2 to #4 being reduced.

[[Option 2]]

At least one of the coding rate and the PUCCH resource for the CSI having intermediate or low priority may be dependent on at least one of the coding rate and the PUCCH resource for the CSI having high priority. For example, in order to maintain certain overhead for one incremental feedback, the PUCCH resource for the CSI having intermediate or low priority may be reduced.

For example, CSI reports #1 to #4 (CSI report ID = 1 to 4) in one incremental feedback may respectively include CSI parts 1 to 4 (or the pieces of CSI 1 to 4), and similarly to FIG. 17 described above, the PUCCH resource for CSI report #1 having high priority may be increased, and the PUCCH resources for other CSI reports #2 to #4 may be reduced. According to the priority of the UCI, a corresponding PUCCH resource may be reduced.

[Embodiment 2-2-3]

The length (the number of bits before channel coding) of a bit sequence for the important UCI (CSI having high priority) may be reduced.

[[Option 1]]

At least one of low resolution (coarse granularity) of quantization of the CSI or the PMI and the codebook having a small size may be used. Each CSI part of one incremental feedback, the number of bits for each piece of UCI, or the codebook (codebook size) may be explicitly or implicitly or jointed to be reported by at least one of RRC, a MAC CE, and DCI.

[[[Option 1-1]]]

The quantization granularity (or the number of bits) of the CSI or the PMI and the codebook (set or size) may be reported by at least one of RRC, a MAC CE, and DCI.

[[[Option 1-2]]]

The quantization granularity (or the number of bits) of the CSI or the PMI and the codebook (set or size) may be determined by the UE, and reported to the BS in the UCI.

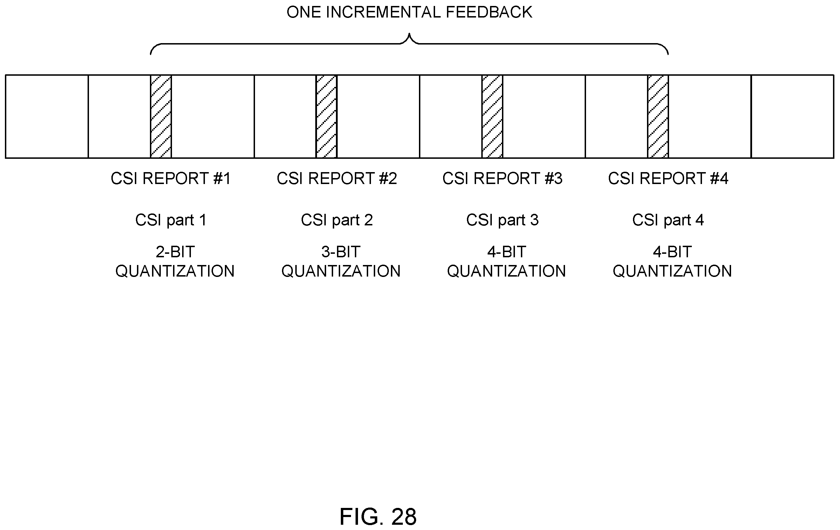

For example, as shown in FIG. 28, CSI reports #1 to #4 (CSI report ID = 1 to 4) in one incremental feedback may respectively include CSI parts 1 to 4 (or the pieces of CSI 1 to 4). The quantization granularity for the CSI having high priority (important UCI) may be coarse. Specifically, the number of bits of the CSI having high priority may be reduced. The number of quantized bits of CSI parts 1 to 4 may be 2, 3, 4, and 4, respectively. CSI report #1 whose priority is the highest priority (smallest priority value) may have the smallest number of bits (quantization granularity may be coarse).

[[Option 2]]

The number $Q^{(m)}$ of PMI feedbacks in the important UCI or the CSI having high priority may be reduced. m may be the number of the CSI part.

[[[Option 2-1]]]

$Q^{(m)}$ may be explicitly or implicitly or jointed to be reported by at least one of RRC, a MAC CE, and DCI.

[[[Option 2-2]]]

A set of values for $Q^{(m)}$ may be reported by at least one of RRC, a MAC CE, and DCI. The value of $Q^{(m)}$ may be selected by the UE, and reported to the BS in the UCI.

[[[Option 2-3]]]

$Q^{(m)}$ may be determined by the UE, and reported to the BS in the UCI.

For example, CSI reports #1 to #4 (CSI report ID = 1 to 4) in one incremental feedback may respectively include CSI parts 1 to 4 (or the pieces of CSI 1 to 4), and similarly to FIG. 19 described above, the number of PMI feedbacks in the CSI having high priority (important UCI) may be reduced. CSI part 1 may include $Q^{(1)} = 1$ PMI, CSI part 2 may include $Q^{(2)} = 2$ PMIs, CSI part 3 may include $Q^{(3)} = 3$ PMIs, and CSI part 4 may include $Q^{(4)} = 4$ PMIs.

[[Option 3]]

Option 1 and Option 2 may be combined. The low resolution (coarse granularity) of quantization of the CSI or the PMI or the codebook having a small size may be used, and the number $Q^{(m)}$ of PMI feedbacks in the important UCI (CSI having high priority) may be reduced.

For example, CSI reports #1 to #4 (CSI report ID = 1 to 4) in one incremental feedback may respectively include CSI parts 1 to 4 (or the pieces of CSI 1 to 4), and similarly to FIG. 20 described above, the number of PMI feedbacks in the CSI having high priority (important UCI) may be reduced. CSI part 1 may include $Q^{(1)} = 1$ PMI, and each PMI may use 2-bit quantization. CSI part 2 may include $Q^{(2)} = 2$ PMIs, and each PMI may use 3-bit quantization. CSI part 3 may include $Q^{(3)} = 3$ PMIs, and each PMI may use 3-bit quantization. CSI part 4 may include $Q^{(4)} = 3$ PMIs, and each PMI may use 4-bit quantization.

<Embodiment 3>

Reporting need not be added to a detection failure of the UCI in one incremental feedback. The UE need not retransmit the UCI that has failed to be detected.

According to the embodiment described above, complexity and overhead of reporting can be reduced.

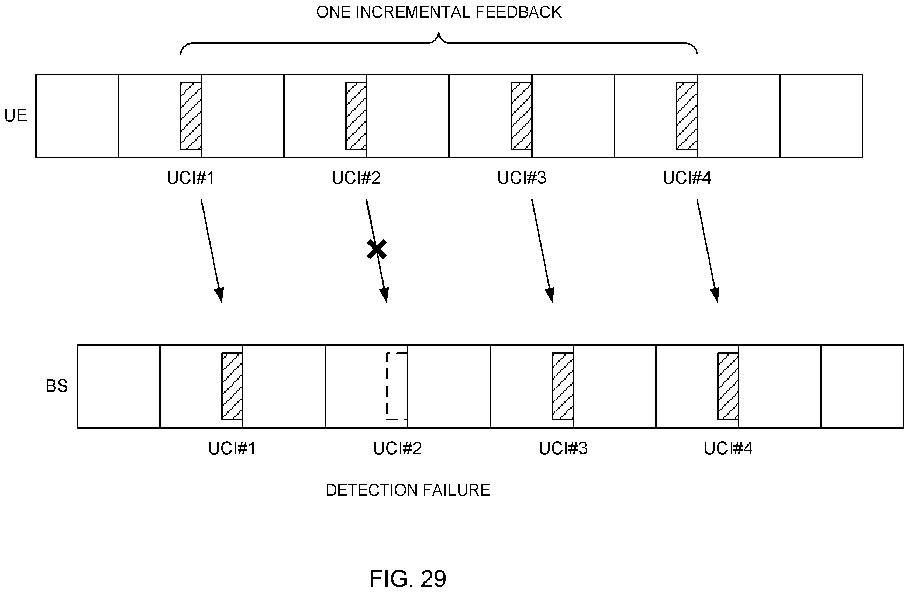

For example, as shown in FIG. 29, the UE transmits the pieces of UCI #1 to #4 for one incremental feedback.

If detection of UCI #2 fails in the BS, the BS reconfigures the CSI by using only pieces of UCI #1, #3, and #4.

<Embodiment 4>

If detection of one or more pieces of UCI fails, the BS may report the ID(s) of the piece(s) of UCI that have failed to be detected to the UE in UL DCI. The UE may transmit the rest of UCI (or CSI parts) in the incremental feedback corresponding to the UCI, based on the resources configured for the original UCI (first transmission). The UE may retransmit the UCI indicated by the reporting on the PUSCH scheduled by the UL DCI.
According to the embodiment described above, performance can be enhanced.
In the UL DCI (for example, DCI format 0_1 or 0_0), a field indicating the ID of the UCI that has failed to be detected may be defined.
After receiving the ID of the UCI that has failed to be detected, the UE may retransmit the indicated UCI on the PUSCH scheduled by the UL DCI. The UE may transmit the rest of the UCI on the resources for the original UCI (first transmission).
The UE may determine whether or not to perform retransmission, based on the PUSCH resources scheduled by the UL DCI.

<<Case 1>>

If the scheduled PUSCH (retransmission of the UCI that has failed to be detected) is before transmission of a new CSI report or before transmission of a new incremental feedback of the same or different CSI report, the UE may retransmit the UCI that has failed to be detected on the scheduled PUSCH resources, and may use the UCI to update the CSI to finer granularity regarding at least one of the frequency and the space.

<<Case 2>>

If the scheduled PUSCH (retransmission of the UCI that has failed to be detected) is after transmission of a new CSI report or after transmission of a new incremental feedback of the same or different CSI report, the UE may drop or ignore a request of the retransmission, and need not retransmit the UCI that has failed to be detected.
For example, when the UCI having ID i is received by the BS after ID i+1 for the same CSI report or the same incremental feedback, the UCI having ID i is effective for performance enhancement. When the UCI having ID i is received by the BS after ID i+1 for a different CSI report or a different incremental feedback, the UCI having ID i is not effective for performance enhancement. In this case, the UE may drop or ignore a request of the retransmission of the UCI having ID i, and need not retransmit the UCI having ID i.
A new field (for example, a UCI indicator for retransmission) indicating the UCI that has failed to be detected in the incremental feedback may be added to at least one of DCI formats 0_1 and 0_0 for PUSCH scheduling.
The UCI indicator for retransmission may include at least one of pieces of information of the following Options 1 and 2.

[Option 1]

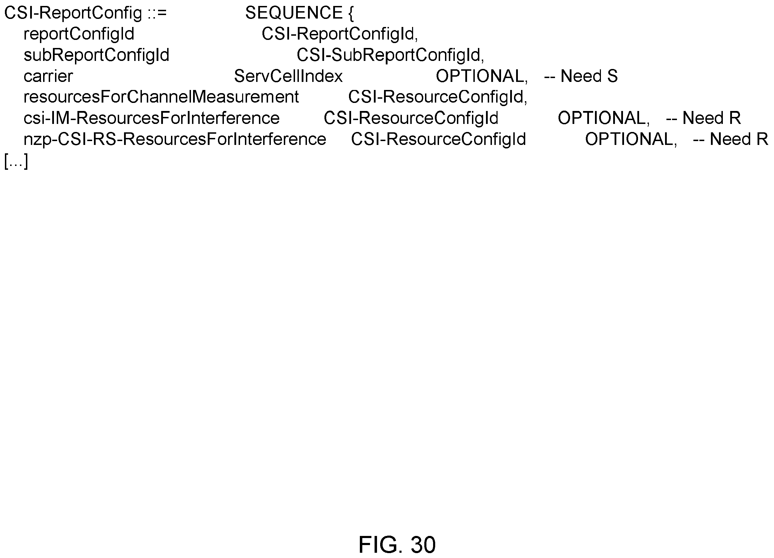

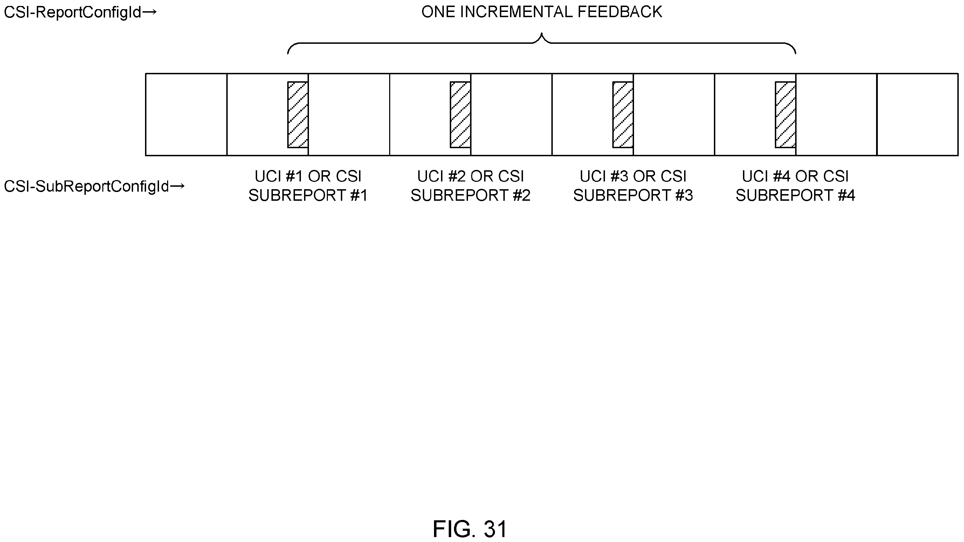

The UCI indicator for retransmission may include the CSI report ID (or the number), and the relative UCI ID (CSI subreport ID) in the CSI report.
One CSI report may be present in one incremental feedback. One CSI report may include a plurality of pieces of UCI (CSI subreports). The CSI report ID may correspond to an incremental feedback ID.
After receiving the CSI report ID and the relative UCI ID in the DCI, the UE may know which piece of UCI (or CSI part) in which CSI report (or incremental feedback) is to be retransmitted in time and frequency resources of the allocated PUSCH.
For example, as shown in FIG. 30, CSI report configuration information (CSI-ReportConfig) may include an ID (for example, reportConfigId, CSI-ReportConfigId) indicating CSI report configuration, and an ID (for example, subReportConfigId, CSI-SubReportConfigId) indicating CSI subreport configuration.
Based on these IDs, the UCI that has failed to be detected may be determined for retransmission. For example, as shown in FIG. 31, the UE transmits the pieces of UCI #1 to #4 (or CSI subreports #1 to #4 (CSI-SubReportConfigId)) in one incremental feedback corresponding to CSI report #n (CSI-ReportConfigId). For example, the UCI that has failed to be detected may be UCI #2 (CSI subreport #2) in CSI report #n.

[Option 2]

The UCI indicator for retransmission may include the CSI report ID (or the number).

A plurality of CSI reports may be present in one incremental feedback. Each CSI report may include one piece of UCI. The incremental feedback ID for each CSI report may be reported by at least one of RRC, a MAC CE, and DCI.

The UE may know which CSI part of which incremental feedback has failed to be detected by receiving the CSI report ID. Retransmission may be executed in the time and frequency resources of the allocated PUSCH.

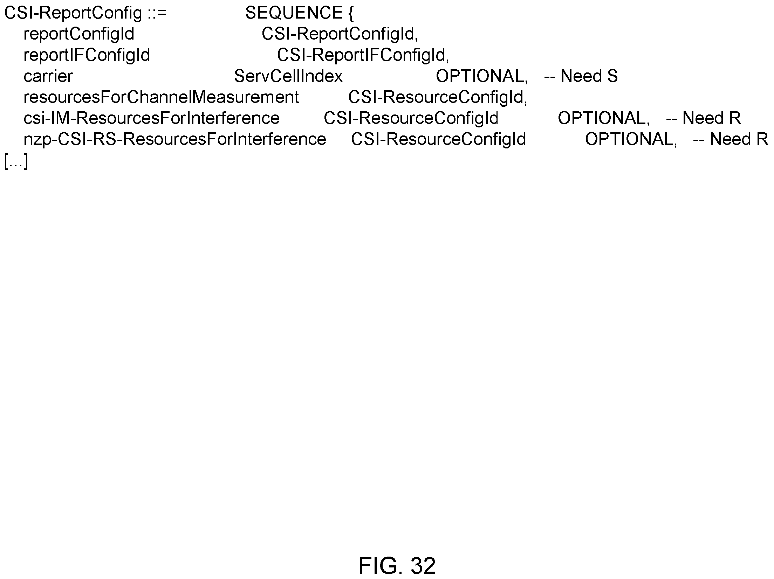

For example, as shown in FIG. 32, the CSI report configuration information (CSI-ReportConfig) may include an ID (for example, reportConfigId, CSI-ReportConfigId) indicating the CSI report configuration, and an ID (for example, reportIFConfigId, CSI-ReportIFConfigId) indicating the incremental feedback.

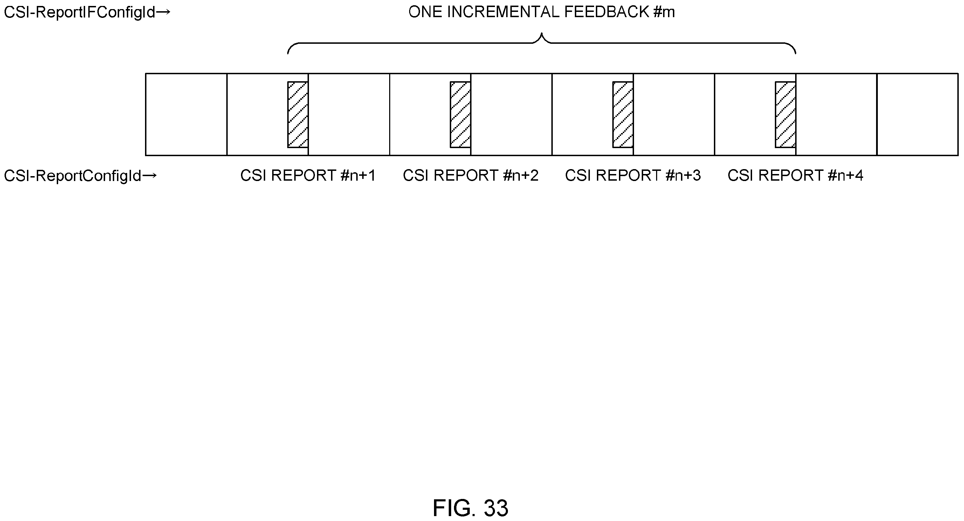

Based on these IDs, the UCI that has failed to be detected may be determined for retransmission. For example, as shown in FIG. 33, the UE transmits CSI reports #n+1 to #n+4 (CSI-ReportConfigId) (or the pieces of UCI #1 to #4) in one incremental feedback #m (CSI-ReportIFConfigId). Here, for example, the UE may know that CSI report #n+2 has failed to be detected, based on the DCI. In addition, the UE may know that the CSI report belongs to incremental feedback #m, based on the RRC configuration. Subsequently, the UE may retransmit CSI report #n+2 (incremental UCI #2 in feedback #m).

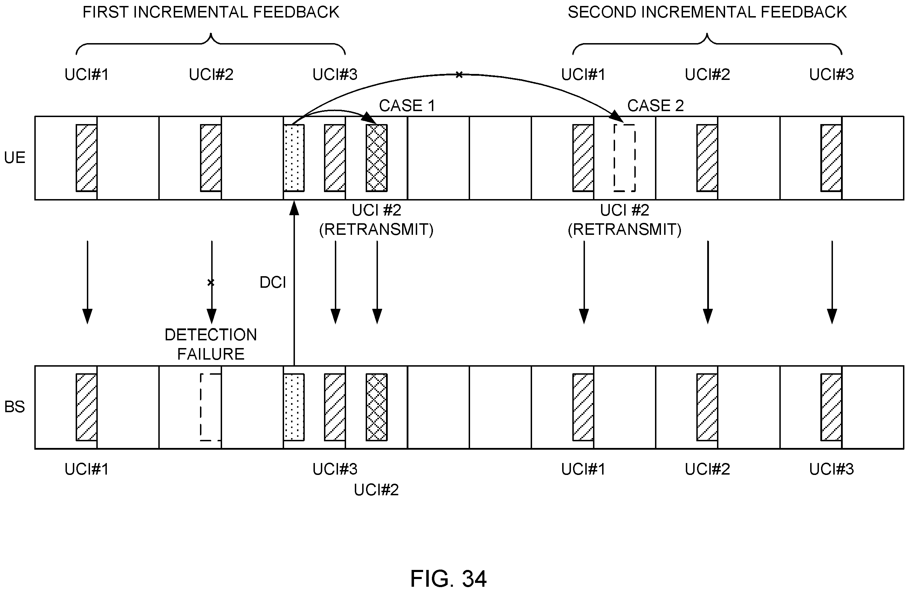

For example, as shown in FIG. 34, the UE transmits the pieces of UCI #1 to #3 of the first incremental feedback, and transmits the pieces of UCI #1 to #3 of the second incremental feedback. The BS fails to detect UCI #2 of the first incremental feedback, and transmits the DCI indicating ID #n of the CSI report or the incremental feedback, ID #2 of the UCI that has failed to be detected, and the resource of UCI #2.

In the example of the figure, the DCI for retransmission of UCI #2 of the first incremental feedback is received at time between the pieces of UCI #2 and #3 of the first incremental feedback. If the retransmission scheduled by the DCI is before the subsequent incremental feedback (Case 1), the UE retransmits UCI #2 in the resource scheduled by the DCI. If the retransmission scheduled by the DCI is after the start (UCI #1) of the subsequent incremental feedback (Case 2), the UE does not retransmit UCI #2.

Regarding the temporal relationship of the DCI for retransmission, the UE may assume any one of the following assumptions 1 to 3.

[[Assumption 1]]

The UE may assume that the DCI for retransmission of the UCI that has failed to be detected is received (arrives) at time between the UCI that has failed to be detected and the subsequent UCI. In the example of the figure, the UE may assume that the DCI for retransmission of UCI #2 is received at time between the pieces of UCI #2 and #3. The UE may ignore the DCI that is received after transmission of UCI #3.

[[Assumption 2]]

The UE may assume that the DCI for retransmission of the UCI that has failed to be detected may be received at any time. In the example of the figure, the UE may assume that the DCI for retransmission of UCI #2 may be received any time.

[[Assumption 3]]

The UE may assume that the DCI for retransmission of the UCI that has failed to be detected is received at time between the UCI and the last UCI of the same incremental feedback. In the example of the figure, the UE may assume that the DCI for retransmission of UCI #2 is received before the last UCI (UCI #3).

<Embodiment 5>

If detection of one or more pieces of UCI fails, the BS may report the ID(s) of the piece(s) of UCI that have failed to be detected to the UE in UL DCI, or may report to the UE that the BS retransmits the piece(s) of UCI that have failed to be detected in the PUCCH resources allocated for the original UCI (first transmission), and if the UCI on the PUCCH is to be transmitted on the PUSCH according to a collision rule (if the UCI is to be transmitted on the PUSCH, based on overlapping of the PUCCH resource and the PUSCH resource), the BS may report to the UE that the BS retransmits the UCI that has failed to be detected in the PUSCH resource.

The UE may retransmit the UCI that has failed to be detected in the later PUCCH resource for the UCI according to reporting.

<<Embodiment 5-1>>

In the DCI, a field indicating miss detected UCI that is to be retransmitted in the PUCCH resource or the PUSCH resource allocated for the original UCI (first transmission) may be defined.

If the DCI schedules the PUSCH or the PDSCH for the UE, the new field (for example, the UCI indicator for retransmission) may be defined in order to indicate the UCI that has failed to be detected in the incremental feedback in at least one of DCI formats 0_0, 0_1, 1_0, and 1_1.

If there is no data for the UE, and the DCI does not schedule the PUSCH or the PDSCH, at least one of the following Options 1 and 2 may be used.

[Option 1]

In order to indicate the UCI that has failed to be detected in the incremental feedback that is to be retransmitted on the PUCCH resource or the PUSCH resource for the original UCI (first transmission), a new field (UCI indicator for retransmission) may be defined in DCI format 2_2 (DCI format used for transmission of a transmission power control (TPC) command for the PUCCH and the PUSCH).

[Option 2]

in order to indicate the UCI that has failed to be detected in the incremental feedback that is to be retransmitted on the PUCCH resource or the PUSCH resource for the original UCI (first transmission), a new DCI format (for example, DCI format 2_x or DCI format y_z) may be defined. x, y, and z may be an integer of 0 or greater.

<<Embodiment 5-2>>

Operation of the UE after reception of the DCI according to Embodiment 5-1 may be defined.

[Option 5-2-1]

The rest of the UCI in the incremental feedback of the UCI that has failed to be detected, or an incremental part (the CSI part in the incremental feedback, the CSI part having the same number as the UCI that has failed to be detected) may be replaced with retransmission of the UCI that has failed to be detected.

After the UE receives indicators of x pieces of UCI that have failed to be detected, the UE may replace the rest of the x pieces of UCI or x incremental parts with the x pieces of UCI that have failed to be detected.

Before the UE receives the indicators of the pieces of UCI that have failed to be detected, the UE may continue transmission of the incremental feedback.

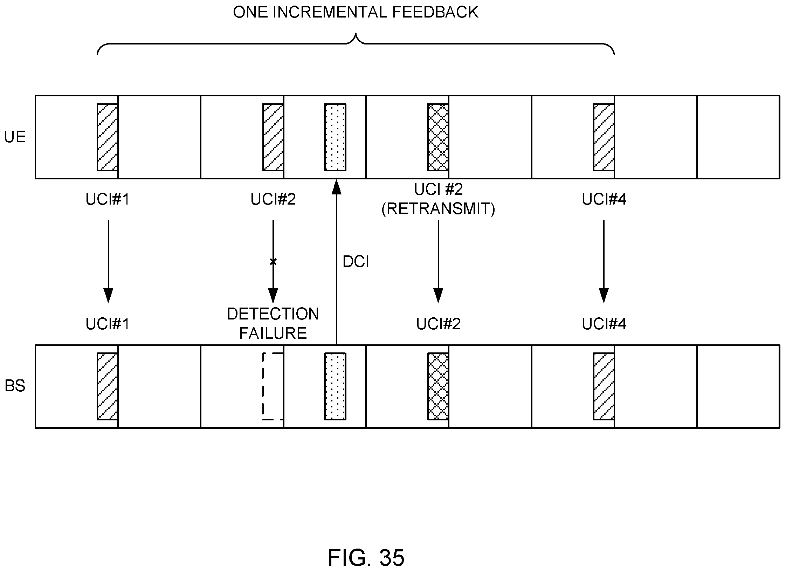

For example, as shown in the left side of FIG. 35, the UE transmits the pieces of UCI #1 to #4 in one incremental feedback, and the BS fails to detect UCI #2. In Case 1, the UE has its DCI received before transmission of UCI #3. The UE may replace UCI #3 with UCI #2.

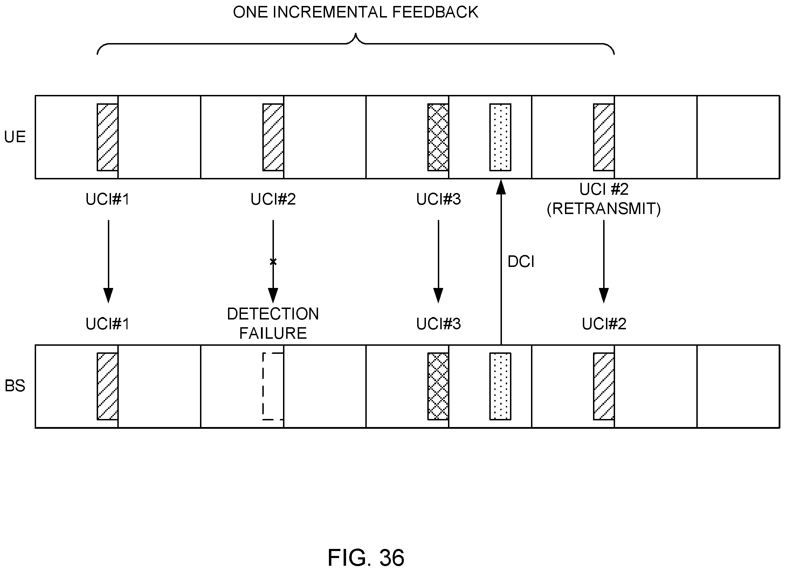

For example, as shown in FIG. 36, the UE transmits the pieces of UCI #1 to #4 in one incremental feedback, and the BS fails to detect UCI #2, In Case 2, the UE receives the DCI after transmission of UCI #3 and before UCI #4, and the UE replaces UCI #4 with UCI #2.

[Option 5-2-2]

The UE retransmits x pieces of UCI that have failed to be detected in the resources configured for the original UCI (first transmission), and may transmit the rest of the UCI in the same incremental feedback in the rest of the resources, or may drop the last x pieces of UCI and need not perform transmission.

After the UE receives the IDs of the x pieces of UCI that have failed to be detected, in the rest of the resources for the same incremental feedback, the UE may retransmit the x pieces of UCI, may transmit the rest of the UCI in the rest of configured resources, or may drop the last x pieces of UCI.

Before the UE receives the indicator of the UCI that has failed to be detected (for example, the UCI indicator for retransmission), the UE may continue transmission of the incremental feedback.

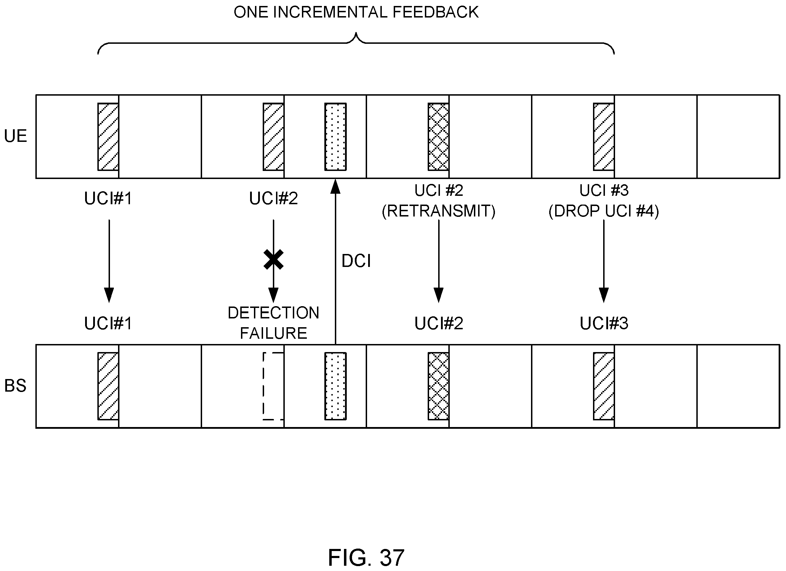

For example, as shown in FIG. 37, the UE attempts to transmit the pieces of UCI #1 to #4 in one incremental feedback. The UE transmits UCI #1, and the BS succeeds in detection of UCI #1. The UE transmits UCI #2, and when the BS fails to detect UCI #2, the UE transmits the DCI indicating UCI #2 that has failed to be detected. The UE that has received the DCI retransmits UCI #2 in the resource for subsequent UCI #3, and the BS succeeds in detection of retransmitted UCI #2. The UE transmits UCI #3 in the resource for subsequent UCI #4, and succeeds in detection of UCI #3. The UE drops UCI #4. The BS obtains the CSI with the pieces of UCI #1 to #3.

According to the embodiment described above, increase of a total number of resources of the UCI in one incremental feedback can be prevented, and overhead can be reduced.

<Embodiment 6>

Based on priority or importance of the UCI that has failed to be detected in one incremental feedback, Embodiment 3 and Embodiment 4 or 5 may be used in combination.

The BS may determine whether the BS retransmits the UCI that has failed to be detected (Embodiment 4 or 5), or does not retransmit the UCI (Embodiment 3).

A measurement criterion (metric) in the name of a standard of importance of the UCI in one incremental feedback may be defined. For example, the priority value may be used as the measurement criterion. A threshold of the measurement criterion for retransmission of the UCI that has failed to be detected may be defined, and may be configured by a higher layer parameter (at least one of RRC and a MAC CE).

If the value of the measurement criterion for the UCI that has failed to be detected is larger than the threshold, Embodiment 4 or 5 may be used. Specifically, retransmission of the UCI that has failed to be detected may be triggered. Otherwise, Embodiment 3 may be used. Specifically, the retransmission need not be triggered.

According to the embodiment described above, a satisfactory trade-off between performance and overhead can be obtained.

<Other Embodiments>

If the detection failure is reported from the BS (for example, by the DCI), the UE may report the CSI that has failed to be detected on a MAC CE. According to the operation described above, the BS need not allocate resources of the PUSCH or the PUCCH for the CSI that has failed to be detected.

If the detection failure is reported from the BS by the DCI, the UE may stop the rest of the reporting of the incremental feedback. According to the operation described above, power consumption of the UE can be saved.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

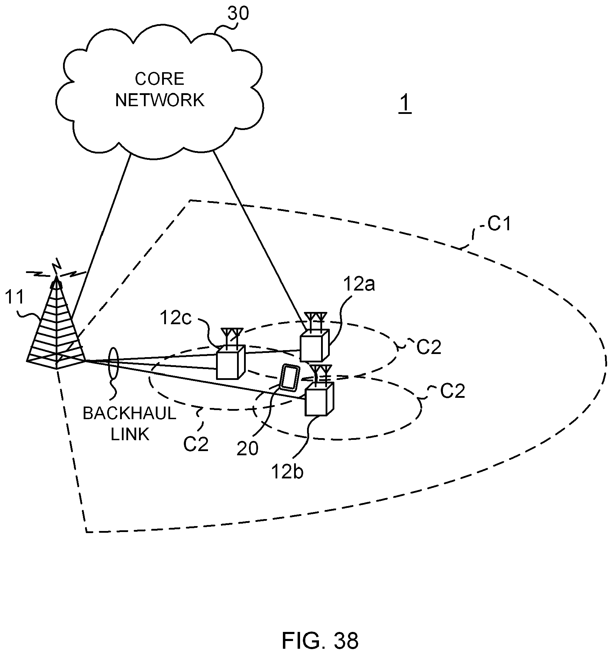

FIG. 38 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

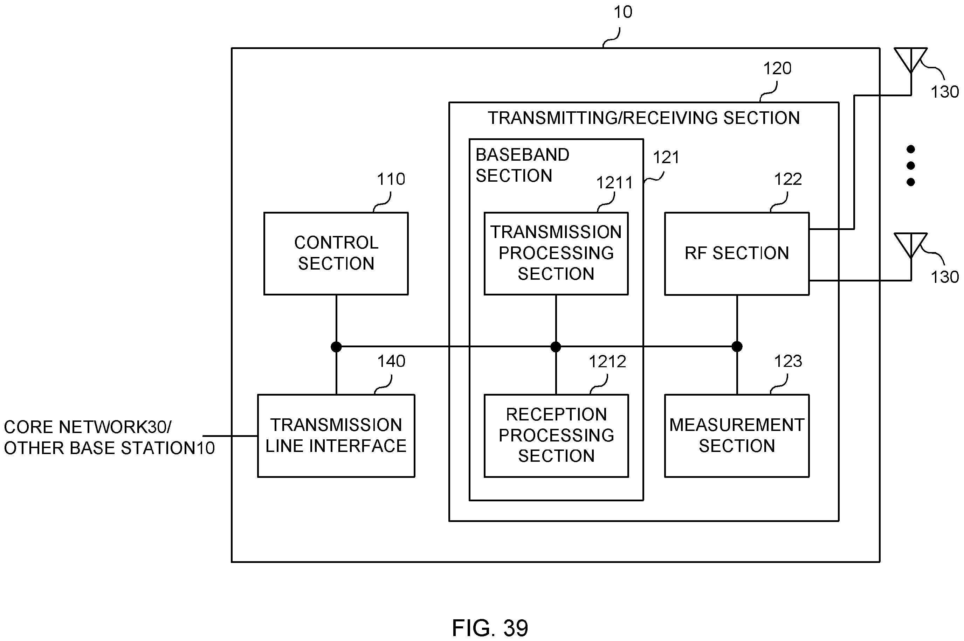

FIG. 39 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

(User Terminal)

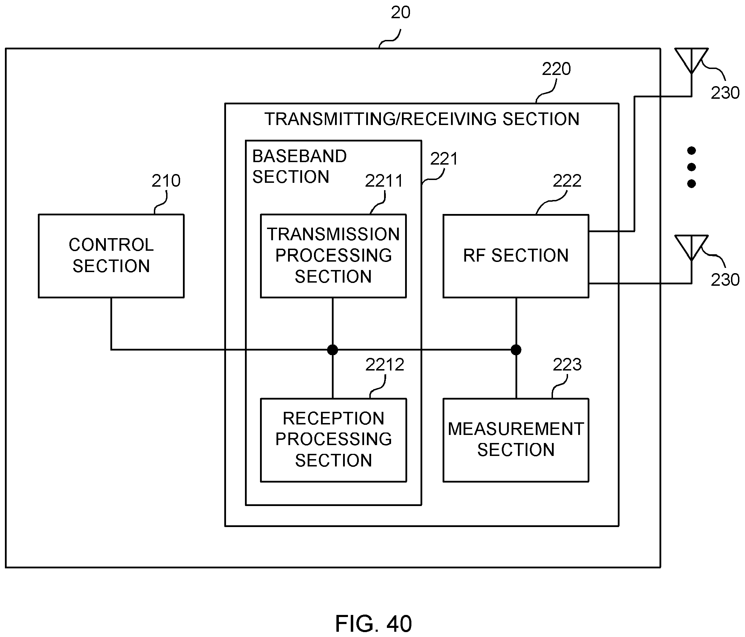

FIG. 40 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding.

The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the transmission line interface 240.

The control section 210 may determine a plurality of pieces of channel state information (CSI) (for example, the UCI, the CSI part, or the CSI report) corresponding to at least one group (for example, the incremental feedback), and an ID (for example, the UCI ID, or the CSI report ID) corresponding to each of the plurality of pieces of CSI. Each of the at least one group may correspond to at least one channel measurement (for example, the RS, or the channel estimation). The transmitting/receiving section 220 may transmit each of the plurality of pieces of CSI in an occasion (for example, the reporting occasion, or the resource of the PUCCH or the PUSCH) corresponding to the ID (Embodiment 1, 2).

The plurality of pieces of CSI may correspond to one group. The ID may be specific to the one group (Embodiment 1).

Each of the plurality of pieces of CSI may correspond to any one of a plurality of groups. The ID may be specific to the plurality of groups (Embodiment 2).

Among the plurality of pieces of CSI, at least one of a number of times of repetition, a size of a resource used for transmission, resolution of quantization of CSI, a size (for example, the number of bits) of the CSI, and a number of precoding matrix indicators (PMIs) may be different dependent on priority of each of the plurality of pieces of CSI.

The control section 210 may determine the ID corresponding to each of the plurality of pieces of CSI, based on configuration information (for example, the RRC IE, or the higher layer parameter) including the ID and an ID corresponding to CSI report configuration or the at least one group.

The transmitting/receiving section 220 may transmit a plurality of pieces of channel state information (CSI) (for example, the plurality of pieces of CSI (the pieces of UCI, the CSI reports) in one incremental feedback) in different occasions (for example, the reporting occasions, or the resources of the PUCCH or the PUSCH). The plurality of pieces of CSI may correspond to at least one channel measurement (for example, the RS, or the channel estimation). The control section 210 may determine, in response to reception of information (for example, the DCI) corresponding to at least one piece of CSI (for example, the UCI that has failed to be detected in the BS, or the miss detected UCI) of the plurality of pieces of CSI, whether or not to perform retransmission of the at least one piece of CSI.

The information may be downlink control information (for example, the UL DCI, or DCI format 0_0 or 0_1) indicating an indicator corresponding to the at least one piece of CSI (for example, the UCI ID, or the CSI report ID) and a resource for the retransmission (for example, the resource of the PUSCH carrying the retransmission of the CSI) (Embodiment 4).

The control section 210 may determine whether or not to perform the retransmission of the at least one piece of CSI, based on time of the resource (Case 1 or Case 2) (Embodiment 4).

The information may be downlink control information (for example, DCI format 0_0, 0_1, 1_0, 1_1, 2_2, 2_x, or y_z) indicating an indicator corresponding to the at least one piece of CSI. The transmitting/receiving section 220 may perform the retransmission in at least one resource out of a plurality of resources (for example, the PUCCH resources allocated to the first transmission of the UCI, the PUSCH resources based on a rule when the PUCCH resources carrying the UCI collide with the PUSCH resources) allocated for each of the plurality of pieces of CSI (Embodiment 5).

The at least one resource may be at least one last resource or at least one resource after the downlink control information out of the plurality of resources (Embodiment 5).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

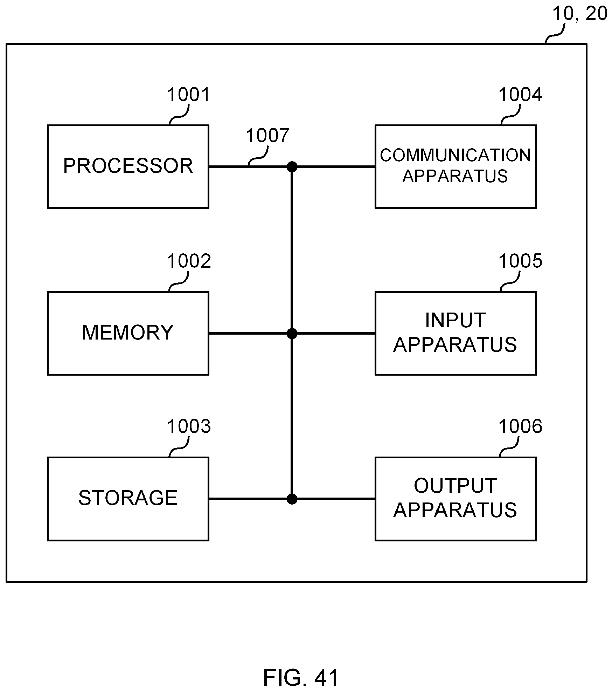

For example, a base station, a user terminal, and so on according to one embodiment of the present disclosure may function as a computer that executes the processes of the radio communication method of the present disclosure. FIG. 41 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that determines a plurality of pieces of channel state information (CSI) corresponding to at least one group and an ID corresponding to each of the plurality of pieces of CSI, each of the at least one group corresponding to at least one channel measurement; and
   a transmitting section that transmits each of the plurality of pieces of CSI in an occasion corresponding to the ID.

2. The terminal according to claim 1, wherein

   the plurality of pieces of CSI correspond to one group, and
   the ID is specific to the one group.

3. The terminal according to claim 1, wherein

   each of the plurality of pieces of CSI corresponds to any one of a plurality of groups, and
   the ID is specific to the plurality of groups.

4. The terminal according to any one of claims 1 to 3, wherein
   among the plurality of pieces of CSI, at least one of a number of times of repetition, a size of a resource used for transmission, resolution of quantization of CSI, a size of the CSI, and a number of precoding matrix indicators is different dependent on priority of each of the plurality of pieces of CSI.

5. The terminal according to any one of claims 1 to 4, wherein
   the control section determines the ID corresponding to each of the plurality of pieces of CSI, based on configuration information including the ID and an ID corresponding to CSI report configuration or the at least one group.

6. A radio communication method for a terminal, comprising the steps of:

   determining a plurality of pieces of channel state information (CSI) corresponding to at least one group and an ID corresponding to each of the plurality of pieces of CSI, each of the at least one group corresponding to at least one channel measurement; and
   transmitting each of the plurality of pieces of CSI in an occasion corresponding to the ID.

separate coding

UCI BIT GENERATION

Q WIDEBAND PMIs

| $a_0$ | $a_1$ | ... | | | | | | | | | | |

$\underset{\text{HARQ-ACK}}{\longleftrightarrow}$ $\underset{\text{SR}}{\times\times}$ $\underset{\text{CSI part 1}}{\longleftrightarrow}$

| $b_0$ | $b_1$ | ... | | | | | | | | | | | | | | | | | | | | | | |

$\underset{\text{CSI part 2}}{\longleftrightarrow}$

CHANNEL CODING $\downarrow$

$c_{00}$ ... $c_{01}$

$\downarrow$

$c_0$ ... $c_1$

RATE MATCHING $\downarrow$

$c_{00}$ ... $c_{01}$

$\underset{\substack{\text{IF THERE IS CSI PART 2, } min(E_{tot}, E_{max})\\ \text{OTHERWISE, } E_{tot}}}{\longleftrightarrow}$

$\downarrow$

$c_0$ ... $c_1$

$\underset{E_{tot}-min(E_{tot}, E_{max})}{\longleftrightarrow}$

FIG. 1

| PUCCH format | Modulation order | |
|---|---|---|
| | QPSK | π/2-BPSK |
| PUCCH format 2 | $16 * N_{symb} * N_{PRB}$ | N/A |
| PUCCH format 3 | $24 * N_{symb} * N_{PRB}$ | $12 * N_{symb} * N_{PRB}$ |
| PUCCH format 4 | $24 * N_{symb} * N_{SF}$ | $12 * N_{symb} * N_{SF}$ |

FIG. 2

BASE STATION

UE

RS — S101

S102

CHANNEL
ESTIMATION

CSI — S103

PDSCH — S104

FIG. 3

FIG. 4A

| | | |
|---|---|---|
| WB | + | SB#1 |
| | | ⋮ |
| | | SB#k-1 |
| | | SB#k |

SUBBAND PMI REPORT

| |
|---|
| SC#1 |
| SC#2 |
| SC#3 |
| SC#4 |
| ⋮ |
| SC#n |

FIG. 4B

| | | |
|---|---|---|
| WB#1 | + ··· + | WB#Q |

WIDEBAND PMI REPORT

| |
|---|
| SC#1 |
| SC#2 |
| SC#3 |
| SC#4 |
| ⋮ |
| SC#n |

EP 4 030 813 A1

41

| WIDEBAND INFORMATION #1 | WIDEBAND INFORMATION #2 |
|---|---|
| DI INDICATING DELAY $\tau_1$ DMI/PMI INDICATING COEFFICIENT $g_1$ | DI INDICATING DELAY $\tau_2$ DMI/PMI INDICATING COEFFICIENT $g_2$ |

| | |
|---|---|
| $\boldsymbol{w}^{(1)} = e^{-j2\pi\tau_1 f_1}\boldsymbol{g}_1 + e^{-j2\pi\tau_2 f_1}\boldsymbol{g}_2$ | SUBCARRIER #1 |
| $\boldsymbol{w}^{(2)} = e^{-j2\pi\tau_1 f_2}\boldsymbol{g}_1 + e^{-j2\pi\tau_2 f_2}\boldsymbol{g}_2$ | SUBCARRIER #2 |
| $\boldsymbol{w}^{(3)} = e^{-j2\pi\tau_1 f_3}\boldsymbol{g}_1 + e^{-j2\pi\tau_2 f_3}\boldsymbol{g}_2$ | SUBCARRIER #3 |
| $\vdots$ | $\vdots$ |
| $\boldsymbol{w}^{(n)} = e^{-j2\pi\tau_1 f_n}\boldsymbol{g}_1 + e^{-j2\pi\tau_2 f_n}\boldsymbol{g}_2$ | SUBCARRIER #n |

FIG. 5

EP 4 030 813 A1

| WIDEBAND INFORMATION #1 | WIDEBAND INFORMATION #2 |
|---|---|
| DI INDICATING DELAY $\tau_1$ DMI/PMI INDICATING COEFFICIENT $\hat{g}^{(1)}$ | DI INDICATING DELAY $\tau_2$ DMI/PMI INDICATING COEFFICIENT $\hat{g}^{(2)}$ |

SPACE INFORMATION

| CODEWORD $\hat{w}$ SELECTED FROM CODEBOOK $W^*$ ANGLE $\theta$ |
|---|

| | |
|---|---|
| $w^{(1)} = \left( e^{-j2\pi\tau_1 f_1} \hat{g}^{(1)} + e^{-j2\pi\tau_2 f_1} \hat{g}^{(2)} \right) A(\theta) \hat{w}$ | SUBCARRIER #1 |
| $w^{(2)} = \left( e^{-j2\pi\tau_1 f_2} \hat{g}^{(1)} + e^{-j2\pi\tau_2 f_2} \hat{g}^{(2)} \right) A(\theta) \hat{w}$ | SUBCARRIER #2 |
| $\vdots$ | $\vdots$ |
| $w^{(n)} = \left( e^{-j2\pi\tau_1 f_n} \hat{g}^{(1)} + e^{-j2\pi\tau_2 f_n} \hat{g}^{(2)} \right) A(\theta) \hat{w}$ | SUBCARRIER #n |

$$A(\theta) = [a(\theta_1), \dots, a(\theta_L)]$$

$$a(\theta_l) = \left[ 1, e^{-j2\pi\frac{d}{\lambda_c}\sin(\theta_l)}, \dots, e^{-j2\pi(M-1)\frac{d}{\lambda_c}\sin(\theta_l)} \right]^T$$

FIG. 6

| WIDEBAND INFORMATION #1 | WIDEBAND INFORMATION #2 |
|---|---|
| CODEWORD $\hat{w}_1$ FOR DELAY $\tau_1$ ANGLE $\theta_1$ COEFFICIENT $\hat{g}^{(1)}$ | CODEWORD $\hat{w}_2$ FOR DELAY $\tau_2$ ANGLE $\theta_2$ COEFFICIENT $\hat{g}^{(2)}$ |

| | |
|---|---|
| $w^{(1)} = \exp(-j2\pi\tau_1 f_1)\, \tilde{g}^{(1)} A(\theta_1)\tilde{w}_1 + \exp(-j2\pi\tau_2 f_1)\, \tilde{g}^{(2)} A(\theta_2)\tilde{w}_2$ | SUBCARRIER 1 |
| $w^{(2)} = \exp(-j2\pi\tau_1 f_2)\, \tilde{g}^{(1)} A(\theta_1)\tilde{w}_1 + \exp(-j2\pi\tau_2 f_2)\, \tilde{g}^{(2)} A(\theta_2)\tilde{w}_2$ | SUBCARRIER 2 |
| $\vdots$ | $\vdots$ |
| $w^{(n)} = \exp(-j2\pi\tau_1 f_n)\, \tilde{g}^{(1)} A(\theta_1)\tilde{w}_1 + \exp(-j2\pi\tau_2 f_n)\, \tilde{g}^{(2)} A(\theta_2)\tilde{w}_2$ | SUBCARRIER n |

FIG. 7

## FIG. 8A

CHANNEL ESTIMATION #1　　　CSI REPORTING　　　　　　　　　　　CSI REPORTING　　　TIME
(CHANNEL MATRIX $H_1$)　　　OCCASION $t_1$　　　　　　　　　　　OCCASION $t_2$

EP 4 030 813 A1

## FIG. 8B

CHANNEL ESTIMATION #1　　　CSI REPORTING　　　CHANNEL ESTIMATION #2　　　CSI REPORTING　　　TIME
(CHANNEL MATRIX $H_1$)　　　OCCASION $t_1$　　　(CHANNEL MATRIX $H_2$)　　　OCCASION $t_2$

FIRST INCREMENTAL FEEDBACK

SECOND INCREMENTAL FEEDBACK

UCI#1　　　UCI#2　　　UCI#3　　　　　　　　UCI#1　　　UCI#2　　　UCI#3

RELATIVE UCI ID

FIG. 9

EP 4 030 813 A1

```
CSI-ReportConfig ::=            SEQUENCE {
    reportConfigId              CSI-ReportConfigId,
    subReportConfigId               CSI-SubReportConfigId,
    carrier                     ServCellIndex            OPTIONAL,   -- Need S
    resourcesForChannelMeasurement        CSI-ResourceConfigId,
    csi-IM-ResourcesForInterference        CSI-ResourceConfigId        OPTIONAL,   -- Need R
    nzp-CSI-RS-ResourcesForInterference    CSI-ResourceConfigId            OPTIONAL,   -- Need R
    reportConfigType            CHOICE {
        periodic                SEQUENCE {
            reportSlotConfig                CSI-ReportPeriodicityAndOffset,
            pucch-CSI-ResourceList              SEQUENCE (SIZE (1..maxNrofBWPs)) OF PUCCH-CSI-Resource
            pucch-subCSI-ResourceList               SEQUENCE (SIZE (1..maxNrofSubReports)) OF PUCCH-CSI-Resource
        },
        semiPersistentOnPUCCH               SEQUENCE {
            reportSlotConfig                CSI-ReportPeriodicityAndOffset,
            pucch-CSI-ResourceList              SEQUENCE (SIZE (1..maxNrofBWPs)) OF PUCCH-CSI-Resource
[...]
```

FIG. 10

EP 4 030 813 A1

FIG. 11

| CSI report number | CSI fields |
|---|---|
| CSI report #n CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | ... |
| | Indicator of UCI ID in one incremental feedback, if reported |

FIG. 12

EP 4 030 813 A1

ONE INCREMENTAL FEEDBACK

UCI#1    UCI#2    UCI#3    UCI#4

EACH PIECE OF UCI INCLUDES UCI ID

FIG. 13

ONE INCREMENTAL FEEDBACK

UCI#1          UCI#1          UCI#2          UCI#3

CSI1           CSI1           CSI2           CSI3

FIG. 14

ONE INCREMENTAL FEEDBACK

UCI#1 — CSI part 1

UCI#2 — CSI part 1

UCI#3 — CSI part 2

UCI#4 — CSI part 3

FIG. 15

ONE INCREMENTAL FEEDBACK

| | | UCI#1 | | UCI#2 | | UCI#3 | | UCI#4 | | |

UCI#1

UCI#2

UCI#3

UCI#4

CSI part 1

CSI part 2

CSI part 3

CSI part 4

FIG. 16

FIG. 17

ONE INCREMENTAL FEEDBACK

UCI#1                UCI#2                UCI#3                UCI#4

CSI part 1           CSI part 2           CSI part 3           CSI part 4

2-BIT                3-BIT                4-BIT                4-BIT
QUANTIZATION         QUANTIZATION         QUANTIZATION         QUANTIZATION

FIG. 18

EP 4 030 813 A1

EP 4 030 813 A1

ONE INCREMENTAL FEEDBACK

| UCI#1 | UCI#2 | UCI#3 | UCI#4 |
|---|---|---|---|
| CSI part 1 | CSI part 2 | CSI part 3 | CSI part 4 |
| $Q^{(1)}$ PMIs | $Q^{(2)}$ PMIs | $Q^{(3)}$ PMIs | $Q^{(4)}$ PMIs |
| $Q^{(1)}=1$ | $Q^{(2)}=2$ | $Q^{(3)}=3$ | $Q^{(4)}=4$ |

FIG. 19

EP 4 030 813 A1

1つのインクリメンタルフィードバック

|  | | UCI#1 | | UCI#2 | | UCI#3 | | UCI#4 | |  |

UCI#1

CSI part 1

$Q^{(1)}$ PMIs

$Q^{(1)}=1$

2-BIT
QUANTIZATION

UCI#2

CSI part 2

$Q^{(2)}$ PMIs

$Q^{(2)}=2$

3-BIT
QUANTIZATION

UCI#3

CSI part 3

$Q^{(3)}$ PMIs

$Q^{(3)}=3$

3-BIT
QUANTIZATION

UCI#4

CSI part 4

$Q^{(4)}$ PMIs

$Q^{(4)}=3$

4-BIT
QUANTIZATION

FIG. 20

FIG. 21

EP 4 030 813 A1

```
CSI-ReportConfig ::=             SEQUENCE {
    reportConfigId                  CSI-ReportConfigId,
    reportIFConfigId                CSI-ReportIFConfigId,
    carrier                 ServCellIndex               OPTIONAL,  -- Need S
    resourcesForChannelMeasurement          CSI-ResourceConfigId,
    csi-IM-ResourcesForInterference         CSI-ResourceConfigId         OPTIONAL,  -- Need R
    nzp-CSI-RS-ResourcesForInterference     CSI-ResourceConfigId         OPTIONAL,  -- Need R
    reportConfigType                CHOICE {
        periodic                    SEQUENCE {
            reportSlotConfig                CSI-ReportPeriodicityAndOffset,
            pucch-CSI-ResourceList              SEQUENCE (SIZE (1..maxNrofBWPs)) OF PUCCH-CSI-Resource
        },
        semiPersistentOnPUCCH               SEQUENCE {
            reportSlotConfig                CSI-ReportPeriodicityAndOffset,
            pucch-CSI-ResourceList              SEQUENCE (SIZE (1..maxNrofBWPs)) OF PUCCH-CSI-Resource
[...]
```

<div align="center">FIG. 22</div>

EP 4 030 813 A1

FIG. 23

| CSI report number | CSI fields |
|---|---|
| CSI report #n CSI part 1 | CRI, if reported |
| | Rank Indicator, if reported |
| | Wideband CQI for the first TB, if reported |
| | Subband differential CQI for the first TB with increasing order of subband number, if reported |
| | Indicator of the number of non-zero wideband amplitude coefficients $M_0$ for layer 0, if reported |
| | Indicator of the number of non-zero wideband amplitude coefficients $M_1$ for layer 1 (if the rank according to the reported RI is equal to one, this field is set to all zeros), if 2-layer PMI reporting is allowed according to the rank restriction, if reported |
| | ... |
| | Indicator of the ID of incremental feedback, if reported |

FIG. 24

ONE INCREMENTAL FEEDBACK #m

UCI UCI UCI UCI

CSI part 1 CSI part 2 CSI part 3 CSI part 4

EACH PIECE OF UCI INCLUDES ID #m
OF INCREMENTAL FEEDBACK

FIG. 25

ONE INCREMENTAL FEEDBACK

CSI REPORT #1 — CSI part 1

CSI REPORT #2 — CSI part 1

CSI REPORT #3 — CSI part 2

CSI REPORT #4 — CSI part 3

FIG. 26

ONE INCREMENTAL FEEDBACK

CSI REPORT #1   CSI REPORT #2   CSI REPORT #3   CSI REPORT #4

CSI part 1   CSI part 2   CSI part 3   CSI part 4

FIG. 27

ONE INCREMENTAL FEEDBACK

| CSI REPORT #1 | CSI REPORT #2 | CSI REPORT #3 | CSI REPORT #4 |

| CSI part 1 | CSI part 2 | CSI part 3 | CSI part 4 |

| 2-BIT QUANTIZATION | 3-BIT QUANTIZATION | 4-BIT QUANTIZATION | 4-BIT QUANTIZATION |

FIG. 28

ONE INCREMENTAL FEEDBACK

UE

UCI#1    UCI#2    UCI#3    UCI#4

BS

UCI#1    UCI#2    UCI#3    UCI#4

DETECTION FAILURE

FIG. 29

```
CSI-ReportConfig ::=           SEQUENCE {
    reportConfigId             CSI-ReportConfigId,
    subReportConfigId              CSI-SubReportConfigId,
    carrier                    ServCellIndex          OPTIONAL,   -- Need S
    resourcesForChannelMeasurement        CSI-ResourceConfigId,
    csi-IM-ResourcesForInterference        CSI-ResourceConfigId         OPTIONAL,   -- Need R
    nzp-CSI-RS-ResourcesForInterference    CSI-ResourceConfigId         OPTIONAL,   -- Need R
[...]
```

FIG. 30

CSI-ReportConfigId→

ONE INCREMENTAL FEEDBACK

CSI-SubReportConfigId→

| UCI #1 OR CSI SUBREPORT #1 | UCI #2 OR CSI SUBREPORT #2 | UCI #3 OR CSI SUBREPORT #3 | UCI #4 OR CSI SUBREPORT #4 |

FIG. 31

```
CSI-ReportConfig ::=              SEQUENCE {
    reportConfigId                  CSI-ReportConfigId,
    reportIFConfigId                CSI-ReportIFConfigId,
    carrier                 ServCellIndex              OPTIONAL,   -- Need S
    resourcesForChannelMeasurement        CSI-ResourceConfigId,
    csi-IM-ResourcesForInterference       CSI-ResourceConfigId        OPTIONAL,   -- Need R
    nzp-CSI-RS-ResourcesForInterference     CSI-ResourceConfigId          OPTIONAL,   -- Need R
[...]
```

FIG. 32

EP 4 030 813 A1

CSI-ReportIFConfigId→

ONE INCREMENTAL FEEDBACK #m

CSI-ReportConfigId→

CSI REPORT #n+1

CSI REPORT #n+2

CSI REPORT #n+3

CSI REPORT #n+4

FIG. 33

FIRST INCREMENTAL FEEDBACK

SECOND INCREMENTAL FEEDBACK

UCI#1        UCI#2        UCI#3        UCI#1        UCI#2        UCI#3

CASE 1        CASE 2

UE

UCI #2
(RETRANSMIT)

UCI #2
(RETRANSMIT)

DCI

DETECTION
FAILURE

BS

UCI#1        UCI#3        UCI#1        UCI#2        UCI#3

UCI#2

FIG. 34

EP 4 030 813 A1

ONE INCREMENTAL FEEDBACK

UE

UCI#1　　　　UCI#2　　　　　　　UCI #2　　　　UCI#4
　　　　　　　　　　　　　　　(RETRANSMIT)

UCI#1　　DETECTION　DCI　　UCI#2　　　UCI#4
　　　　　FAILURE

BS

FIG. 35

FIG. 36

EP 4 030 813 A1

ONE INCREMENTAL FEEDBACK

UE

UCI#1

UCI#2

DCI

UCI #2
(RETRANSMIT)

UCI #3
(DROP UCI #4)

UCI#1

DETECTION
FAILURE

UCI#2

UCI#3

BS

EP 4 030 813 A1

FIG. 37

FIG. 38

FIG. 39

EP 4 030 813 A1

FIG. 40

20

230

230

220 TRANSMITTING/RECEIVING SECTION

222 RF SECTION

223 MEASUREMENT SECTION

221 BASEBAND SECTION

2211 TRANSMISSION PROCESSING SECTION

2212 RECEPTION PROCESSING SECTION

210 CONTROL SECTION

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 41

**INTERNATIONAL SEARCH REPORT**

| International application No. |
| --- |
| PCT/JP2019/036133 |

A. CLASSIFICATION OF SUBJECT MATTER
H04W 24/10(2009.01)i
FI: H04W24/10

According to International Patent Classification (IPC) or to both national classification and IPC

B. FIELDS SEARCHED

Minimum documentation searched (classification system followed by classification symbols)
H04W24/10

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2019-91962 A (SHARP CORP.) 13.06.2019 (2019-06-13) entire text, all drawings | 1-6 |
| A | WO 2018/031924 A1 (CONVIDA WIRELESS, LLC) 15.02.2018 (2018-02-15) entire text, all drawings | 1-6 |
| A | QUALCOMM INCORPORATED, "On Type I and Type II CSI Reporting [online]", 3GPP TSG RAN WG1 adhoc_NR_AH_1709 R1-1716395, 12 September 2017, entire text, all drawings | 1-6 |
| A | ERICSSON, "On remaining details of CSI reporting [online]", 3GPP TSG RAN WG1 #90b R1-1718432, 03 October 2017, entire text, all drawings | 1-6 |

☐ Further documents are listed in the continuation of Box C.    ☒ See patent family annex.

| | |
| --- | --- |
| *     Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| 11 March 2020 (11.03.2020) | 07 April 2020 (07.04.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2019/036133 |

| Patent Documents referred in the Report | Publication Date | Patent Family | Publication Date |
| --- | --- | --- | --- |
| JP 2019-91962 A | 13 Jun. 2019 | WO 2017/169467 A1 entire text, all drawings | |
| WO 2018/031924 A1 | 15 Feb. 2018 | JP 2019-528015 A entire text, all drawings US 2019/0342768 A1 EP 3497813 A1 CN 110326228 A | |

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010